(19) Europäisches Patentamt
European Patent Office
Office européen des brevets

(11) EP 1 133 504 B1

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(21) Anmeldenummer: **99960984.5**

(22) Anmeldetag: **18.11.1999**

(51) Int Cl.[7]: **C07F 17/00**, C08F 10/00

(86) Internationale Anmeldenummer:
**PCT/EP99/08854**

(87) Internationale Veröffentlichungsnummer:
**WO 00/031091 (02.06.2000 Gazette 2000/22)**

(54) **VERFAHREN ZUR HERSTELLUNG VON MONOARYLOXY-ANSA-METALLOCENEN**

METHOD FOR PRODUCING MONOARYLOXY-ANSA-METALLOCENES

PROCEDE DE PRODUCTION DE MONOARYLOXY-ANSA-METALLOCENES

(84) Benannte Vertragsstaaten:
**BE DE ES FI FR GB IT NL**

(30) Priorität: **25.11.1998 DE 19854350**
**19.03.1999 DE 19912576**

(43) Veröffentlichungstag der Anmeldung:
**19.09.2001 Patentblatt 2001/38**

(73) Patentinhaber: **Basell Polyolefine GmbH**
**50389 Wesseling (DE)**

(72) Erfinder:
- **BINGEL, Carsten**
  **D-65830 Kriftel (DE)**
- **BRINTZINGER, Hans-Herbert**
  **CH-8274 Tägerwilen (CH)**
- **DAMRAU, Hans-Robert-Hellmuth**
  **D-78462 Konstanz (DE)**

(74) Vertreter: **Colucci, Giuseppe et al**
**Basell Poliolefine Italia S.p.A.,**
**Intellectual Property,**
**P.le G. Donegani 12**
**44100 Ferrara (IT)**

(56) Entgegenhaltungen:
- **CHEMICAL ABSTRACTS, vol. 126, no. 20, 19. Mai 1997 (1997-05-19) Columbus, Ohio, US; abstract no. 264146, SCHMIDT, KATRIN ET AL: "Photochemical Isomerization of Me2Si-Bridged Zirconocene Complexes. Application to Stereoselective Syntheses of ansa-Zirconocene Binaphtholat Stereoisomers" XP002128401 & ORGANOMETALLICS (1997), 16(8), 1724-1728 ,**
- **CHEMICAL ABSTRACTS, vol. 117, no. 17, 26. Oktober 1992 (1992-10-26) Columbus, Ohio, US; abstract no. 171616, WANG, YING ET AL: "Reactions of sila-bridged biscyclopentadienyl IVB group metal dichlorides" XP002128402 & YOUJI HUAXUE (1992), 12(3), 286-90 ,**
- **DORMOND, A. ET AL: "Dynamic stereochemistry of titanium(III).fwdarw. titanium(IV) transformation for complexes with 2 cyclopentadienyl ligands" J. ORGANOMET. CHEM. (1979), 165(3), 319-27 , XP002128396**
- **DORMOND, ALAIN ET AL: "Aryloxy complexes of dicyclopentadienyltitanium(III) derivatives" J. ORGANOMET. CHEM. (1977), 125(1), 63-9 , XP002128397**
- **DORMOND, A. ET AL: "Pseudotetrahedral complexes of titanium with metal-centered chirality" J. ORGANOMET. CHEM. (1975), 101(1), 71-84 , XP002128398**

EP 1 133 504 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein stereoselektives Syntheseverfahren zur Herstellung von Monoaryloxy-Ansa-Metallocenen sowie deren Verwendung in der Polymerisation von Olefinen.

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Metallocene sind nicht nur hinsichtlich der Polymerisation von Olefinen von großem Interesse, sie können auch als Hydrier-, Epoxidierungs-, Isomerisierungs- und C-C-Kupplungskatalysatoren eingesetzt werden (Chem. Rev., 92 (1992), 965-994).

Die Herstellung von Metallocenen ist an sich bekannt (US 4,752,597; US 5,017,714; EP-A-320762; EP-A-416815; EP-A-537686; EP-A- 669340; H.H. Brintzinger et al., Angew. Chem., 107 (1995), 1255; H.H. Brintzinger et al., J. Organomet. Chem. 232 (1982), 233). Dazu können zum Beispiel Cyclopentadienyl-Metall-verbindungen mit Halogeniden von Übergangsmetallen wie Titan, Zirkonium, Hafnium, Vanadium, Niob, Tantal, Chrom, Molybdän, Cer und Thorium umgesetzt werden.

Literaturbekannt ist weiterhin, daß Metallocene beispielsweise durch Reaktion von Cyclopentadienen mit Amiden der Gruppe 4 des Periodensystems der Elemente (PSE) erhalten werden können (US 5,597,935; R.F. Jordan et al., Organometallics, 15 (1996), 4030).

Für die Herstellung von isotaktischem Polypropylen (i-PP) werden in der Regel ansa-Metallocenhalogenide in ihrer racemischen Form eingesetzt. Als besonders leistungsfähig und damit technisch relevant haben sich die substituierten racemischen Ansa-Bis-Indenyl-Zirkonocendichloride herausgestellt (EP 0485823, EP 0549900, EP 0576970, WO 98/40331). Diese technisch interessanten Metallocendichloride sind überwiegend schwer lösliche Verbindungen, wodurch beispielsweise die Aufreinigung dieser racemischen Metallocene durch Umkristallisation sehr erschwert wird.

Die gewünschten substituierten racemischen Ansa-Bis-Indenyl-Metallocendichloride fallen bei ihrer Herstellung in der Regel zusammen mit den Meso-Formen als 1 zu 1 Rac/Meso-Diastereomerengemische an, wodurch die Ausbeuten an den gewünschten Rac-Metallocenen bezogen auf die kostbaren Ligand-Ausgangsverbindungen stark begrenzt sind. Die bei der Herstellung gebildeten Rohprodukte enthalten neben den Diastereomerengemischen noch anorganische Nebenprodukte (z. B. Salze) und organische Nebenprodukte (z. B. nicht umgesetzte substituierte Cyclopentadienylliganden). Bei der Verwendung von Metallocenen als Katalysatorkomponente, sowohl in homogenen als auch in heterogenisierten Katalysatorsystemen, beeinträchtigen die Nebenprodukte, insbesondere die Meso-Form des Metallocens, die Katalysatoraktivität bei der Olefinpolymerisation und die Spezifikation des Polymers (zum Beispiel zu hohe extrahierbare Anteile im i-PP). Für die Abtrennung der verschiedenen Nebenprodukte sind verschiedene Methoden bekannt (US-A-5,455,366, EP-A-0576970, DE-A-19547247, DE-A-19547248, US-A-5,556,997).

Dormond et al., J. Organomet, Chem., Vol. 101 (1), Seiten 71-84 (1975) beschreibt chrirale, phenoxysubstituierte ansa-Titanocene.

Auf Grund der oben beschriebenen Rac/Meso-Problematik und der aufwendigen Aufreinigung liegen die Kosten für die Herstellung der Ansa-Metallocene-Katalysatorkomponente noch nicht in einem. wünschenswerten Bereich.

Es stellte sich somit die Aufgabe, ein wirtschaftlicheres Verfahren zur Herstellung gut aufzureinigender racemischer Metallocene zu finden, welches insbesondere zur Herstellung von racemischen substituierten Ansa-Bisindenyl-Metallocenen geeignet ist, die direkt als Katalysatorkomponenten in der Propylenpolymerisation eingesetzt werden können.

Es wurde nun überraschenderweise gefunden, daß diese Aufgabe durch Verwendung von speziellen Übergangsmetallverbindungen der Formel (I) zur Herstellung von Metallocenen der Formel (II) gelöst wird.

Gegenstand der vorliegenden Erfindung ist somit ein Verfahren zur Herstellung von gut löslichen und leicht aufzureinigenden Monoaryloxy-Metallocenen der Formel (II), wobei eine Ligandausgangsverbindung (III) mit einer Übergangsmetallverbindung der Formel (I) umgesetzt wird,

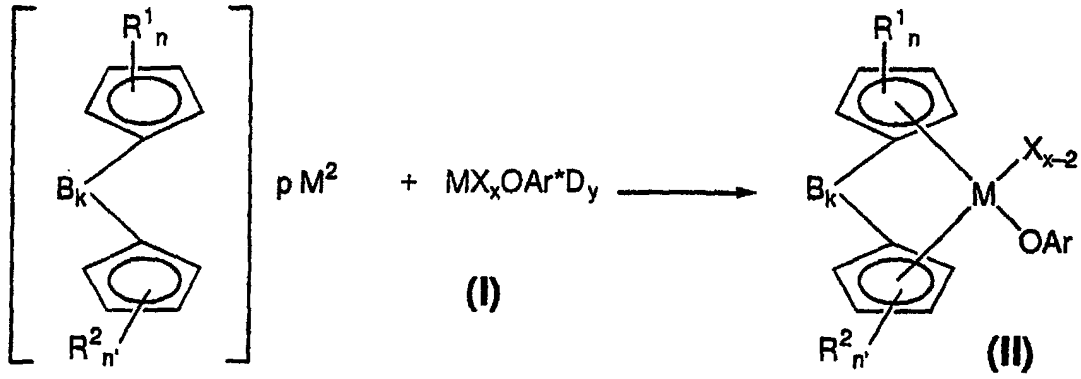

(III) (I) (II)

wobei

M ein Metall der III., IV., V. oder VI. Nebengruppe des Periodensystems der Elemente ist, insbesondere Ti, Zr oder Hf, besonders bevorzugt Zirkonium,

X ein Halogenatom, insbesondere Chlor, ist,

Ar eine $C_6$-$C_{40}$-kohlenstoffhaltige aromatische Gruppe ist, bevorzugt $C_6$-$C_{24}$-Aryl, $C_5$-$C_{24}$-Heteroaryl wie Pyridyl, Furyl oder Chinolyl, $C_7$-$C_{30}$-Alkylaryl, fluorhaltiges $C_6$-$C_{24}$-Aryl oder fluorhaltiges $C_7$-$C_{30}$-Alkylaryl, besonders bevorzugt eine mit $C_1$-$C_6$-Alkyl und/oder $C_6$-$C_{10}$-Aryl-Resten substituierte $C_6$-$C_{14}$-Arylgruppe,

D ein neutraler lewisbasischer Ligand ist, bevorzugt ein linearer, cyclischer oder verzweigter Sauerstoff-, Schwefel-, Stickstoff- oder Phosphor-haltiger Kohlenwasserstoff, besonders bevorzugt ein Ether, Polyether, Amin oder Polyamin,

$M^2$ Li, Na, K, MgCl, MgBr, Mg oder Ca ist,

$R^1$ gleich oder verschieden sind und $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl, oder $R^1$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,
oder zwei oder mehrere Reste $R^1$ können so miteinander verbunden sein, daß die Reste $R^1$ und die sie verbindenden Atome des Cyclopentadienylringes ein $C_4$-$C_{24}$-Ringsystem bilden, welches seinerseits substituiert sein kann,

$R^2$ gleich oder verschieden sind und $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl, oder $R^2$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,
oder zwei oder mehrere Reste $R^2$ können so miteinander verbunden sein, daß die Reste $R^2$ und die sie verbindenden Atome des Cyclopentadienylringes ein $C_4$-$C_{24}$-Ringsystem bilden, welches seinerseits substituiert sein kann,

x gleich der Oxidationzahl von M minus 1 ist,

n gleich 1 bis 5 für k = 0, und n gleich 0 bis 4 für k = 1 ist,

n' gleich 1 bis 5 für k = 0, und n' gleich 0 bis 4 für k = 1 ist,

k gleich Null oder 1 ist, wobei für k = 0 ein unverbrücktes Metallocen, für k = 1 ein verbrücktes Metallocen vorliegt, wobei k = 1 bevorzugt ist, und

p gleich 1 für zweifach positiv geladene Metallionen oder 2 für einfach positiv geladene Metallionen oder Metallionenfragmente,

y eine Zahl zwischen 0 und 2 ist,

B ein verbrückendes Strukturelement zwischen den beiden Cyclopentadienylringen bezeichnet.

Beispiele für B sind Gruppen $M^3R^{13}R^{14}$, worin $M^3$ Kohlenstoff, Silizium, Germanium oder Zinn ist und $R^{13}$ und $R^{14}$ gleich oder verschieden eine $C_1$-$C_{20}$-kohlenwasserstoffhaltige Gruppe wie $C_1$-$C_{10}$-Alkyl, $C_6$-$C_{14}$-Aryl oder Trimethylsilyl bedeuten. Bevorzugt ist B gleich $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2Si$, $(C_6H_5)(CH_3)Si$, $Si(CH_3)(SiR^{20}R^{21}R^{22})$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$. Wobei $R^{20}R^{21}R^{22}$ gleich oder verschieden eine $C_1$-$C_{20}$-kohlenwasserstoff-haltige Gruppe wie $C_1$-$C_{10}$-Alkyl oder $C_6$-$C_{14}$-Aryl bedeuten. B kann auch mit einem oder mehreren Resten $R^1$ und/oder $R^2$ ein mono- oder polycyclisches Ringsystem bilden.

Bevorzugt werden nach dem erfindungsgemäßen Verfahren verbrückte Metallocenverbindungen der Formel (II) hergestellt, bei denen k gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit $C_1$-$C_{20}$-kohlenstoffhaltigen Gruppen, wie $C_1$-$C_{18}$-Alkyl oder $C_6$-$C_{18}$-Aryl, wobei auch zwei oder mehrere Substituenten des Indenylrings zusammen ein Ringsystem bilden können.

Ein weiterer Gegenstand der Erfindung ist ein Verfahren zur Herstellung, insbesondere ein Verfahren zur stereoselektiven Herstellung, von gut löslichen Ansa-Monoaryloxy-Bisindenyl-Metallocenen der Formel (IV), wobei eine Ligandausgangsverbindung (V) mit einer Übergangsmetallverbindung der Formel (Ia) umgesetzt wird,

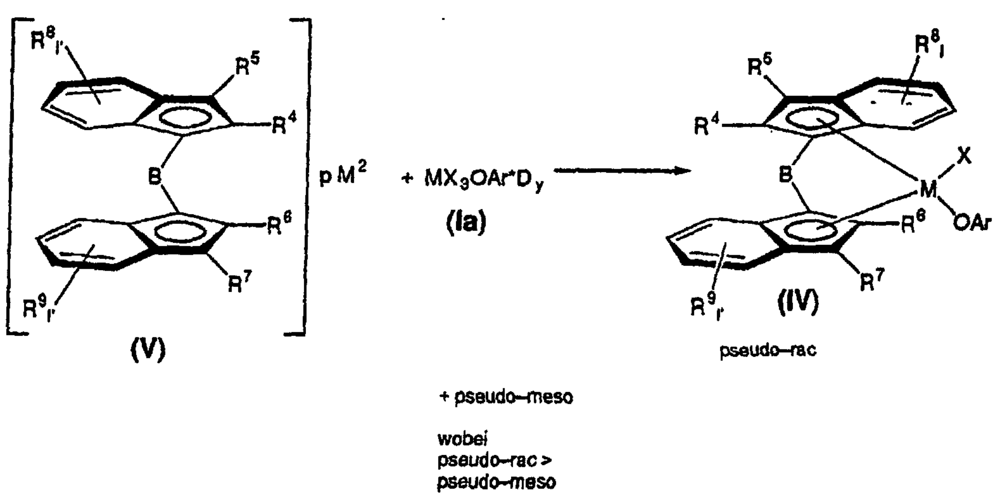


worin

M gleich Ti, Zr oder Hf ist, besonders bevorzugt Zirkonium,

X ein Halogenatom, insbesondere Chlor, ist,

Ar eine $C_6$-$C_{40}$-kohlenstoffhaltige aromatische Gruppe ist, bevorzugt $C_6$-$C_{24}$-Aryl, $C_5$-$C_{24}$-Heteroaryl wie Pyridyl, Furyl oder Chinolyl, $C_7$-$C_{30}$-Alkylaryl, fluorhaltiges $C_6$-$C_{24}$-Aryl, oder fluorhaltiges $C_7$-$C_{30}$-Alkylaryl, besonders bevorzugt eine mit $C_1$-$C_6$-Alkyl und/oder $C_6$-$C_{10}$-Aryl-Resten substituierte $C_6$-$C_{14}$-Arylgruppe,

D ein neutraler lewisbasischer Ligand ist, bevorzugt ein linearer, cyclischer oder verzweigter Sauerstoff-, Schwefel-, Stickstoff- oder Phosphor-haltiger Kohlenwasserstoff, besonders bevorzugt ein Ether, Polyether, Amin oder Polyamin,

$M^2$ Li, Na, K, MgCl, MgBr, Mg oder Ca ist,

$R^4$, $R^6$ gleich oder verschieden sind und ein Wasserstoffatom oder eine $C_1$-$C_{20}$ - kohlenstoffhaltige Gruppe, bevorzugt $C_1$-$C_{18}$-Alkyl, wie Methyl, Ethyl, iso-Propyl, n-Butyl, iso-Butyl, Cyclohexyl oder Octyl, $C_2$-$C_{10}$-Alkenyl, $C_3$-$C_{15}$-Alkylalkenyl, $C_6$-$C_{18}$-Aryl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl ist,

$R^5$, $R^7$ gleich oder verschieden sind und ein Wasserstoffatom oder eine $C_1$-$C_{20}$- kohlenstoffhaltige Gruppe, bevorzugt $C_1$-$C_{18}$-Alkyl, wie Methyl, Ethyl, n-Butyl, Cyclohexyl oder Octyl, $C_2$-$C_{10}$-Alkenyl, $C_3$-$C_{15}$-Alkylalkenyl, $C_6$-$C_{18}$-Aryl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl sind,

$R^8$ und $R^9$ gleich oder verschieden sind und ein Wasserstoffatom, Halogenatom oder eine $C_1$-$C_{20}$ - kohlenstoffhaltige Gruppe bedeuteten, bevorzugt eine lineare oder verzweigte $C_1$-$C_{18}$-Alkylgruppe, wie Methyl, Ethyl, tert.-Butyl, Cyclohexyl oder Octyl, $C_2$-$C_{10}$-Alkenyl, $C_3$-$C_{15}$-Alkylalkenyl, eine $C_6$-$C_{18}$-Arylgruppe, die gegebenenfalls substituiert sein kann, insbesondere Phenyl, Tolyl, Xylyl, tert.-Butylphenyl, Ethylphenyl, Di-tert.-butyl-phenyl, Naphthyl, Acenaphthyl, Phenanthrenyl oder Anthracenyl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl sind, und zwei Reste $R^8$ oder $R^9$ ein mono- oder polycyclisches Ringssystem bilden können, das seinerseits gegebenenfalls substituiert sein kann,

l, l' gleich oder verschieden eine ganze Zahl zwischen Null und 4, bevorzugt 1 oder 2, besonders bevorzugt gleich 1 sind,

p gleich 1 für zweifach positiv geladene Metallionen oder 2 für einfach positiv geladene Metallionen oder Metallionenfragmente,

y eine Zahl zwischen 0 und 2 ist,

B ein verbrückendes Strukturelement zwischen den beiden Indenylresten bezeichnet.

Beispiele für B sind Gruppen $M^3R^{13}R^{14}$, worin $M^3$ Kohlenstoff, Silizium, Germanium oder Zinn ist, bevorzugt Kohlenstoff und Silizium, und $R^{13}$ und $R^{14}$ gleich oder verschieden Wasserstoff, eine $C_1$-$C_{20}$-kohlenwasserstoffhaltige Gruppe wie $C_1$-$C_{10}$-Alkyl, $C_6$-$C_{14}$-Aryl oder Trimethylsilyl bedeuten. Bevorzugt ist B gleich $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2C$, $(C_6H_5)_2Si$, $(C_6H_5)(CH_3)Si$, $Si(CH_3)(SiR^{20}R^{21}R^{22})$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$. Wobei $R^{20}R^{21}R^{22}$ gleich oder verschieden eine $C_1$-$C_{20}$-kohlenwasserstoff-haltige Gruppe wie $C_1$-$C_{10}$-Alkyl oder $C_6$-$C_{14}$-Aryl bedeuten.

Bevorzugt ist ein Verfahren zur Herstellung, insbesondere zur stereoselektiven Herstellung, von gut löslichen Ansa-Monoaryloxy-Bisindenyl-Metallocenen der Formel (IV), wobei eine Ligandausgangsverbindung (V) mit einer Übergangsmetallverbindung der Formel (Ia) umgesetzt wird,
worin

M gleich Zirkonium ist,

X Chlor ist,

Ar eine $C_6$-$C_{30}$-kohlenstoffhaltige aromatische Gruppe ist, bevorzugt eine mit $C_1$-$C_6$-Alkyl und/oder $C_6$-$C_{10}$-Aryl substituierte $C_6$-$C_{14}$-Arylgruppe, $C_5$-$C_{13}$-Heteroaryl wie Pyridyl, Furyl oder Chinolyl oder fluorhaltiges $C_6$-$C_{10}$-Aryl, besonders bevorzugt eine $C_6$-$C_{10}$-Arylgruppe, die in mindestens einer der beiden Ortho-Positionen zum Sauerstoff mit einer $C_1$-$C_{10}$-kohlenstoffhaltigen Gruppe, wie beispielsweise einer $C_1$-$C_6$-Alkyl- und/oder $C_6$-$C_{10}$-ArylGruppe substituiert ist,

D ein neutraler lewisbasischer Ligand ist, bevorzugt ein Ether, Polyether, Amin oder Polyamin, wie beispielsweise Diethylether, Dibutylether, 1,2-Dimethoxyethan, Tetrahydrofuran oder N,N,N',N'-Tetramethylethylendiamin,

$M^2$ Li, Na, K, MgCl, MgBr, Mg oder Ca, bevorzugt Li, Na, Mg, ist

$R^4$, $R^6$ gleich oder verschieden sind und ein Wasserstoffatom oder eine $C_1$-$C_{12}$-Alkylgruppe, bevorzugt eine Alkylgruppe wie Methyl, Ethyl, iso-Propyl, n-Butyl, iso-Butyl oder Octyl, besonders bevorzugt Methyl oder Ethyl sind,

$R^5$, $R^7$ gleich Wasserstoffatome sind,

$R^8$ und $R^9$ gleich oder verschieden sind und ein Wasserstoffatom, Halogenatom oder eine $C_1$-$C_{20}$ - kohlenstoffhaltige Gruppe bedeuten, bevorzugt eine lineare oder verzweigte $C_1$-$C_8$-Alkylgruppe, wie Methyl, Ethyl, tert. -Butyl, Cyclohexyl oder Octyl, $C_2$-$C_6$-Alkenyl, $C_3$-$C_6$-Alkylalkenyl, eine $C_6$-$C_{18}$-Arylgruppe, die gegebenenfalls substituiert sein kann, insbesondere Phenyl, Tolyl, Xylyl, tert.-Butylphenyl, Ethylphenyl, Di-tert.-butyl-phenyl, Naphthyl, Acenaphthyl, Phenanthrenyl oder Anthracenyl, $C_5$-$C_{18}$-Heteroaryl wie Pyridyl, Furyl oder Chinolyl, $C_7$-$C_{12}$-Arylalkyl, $C_7$-$C_{12}$-Alkylaryl, fluorhaltiges $C_1$-$C_8$-Alkyl, fluorhaltiges $C_6$-$C_{18}$-Aryl, fluorhaltiges $C_7$-$C_{12}$-Arylalkyl oder fluorhaltiges $C_{7-}C_{12}$-Alkylaryl ist,

l, l' gleich oder verschieden eine ganze Zahl zwischen Null und 4, bevorzugt 1 oder 2, besonders bevorzugt gleich 1 ist,

p gleich 1 für zweifach positiv geladene Metallionen oder 2 für einfach positiv geladene Metallionen oder Metallionenfragmente,

y eine Zahl zwischen 0 und 2 ist,

B ein verbrückendes Strukturelement zwischen den beiden Indenylresten bezeichnet, wobei bevorzugt B gleich $(CH_3)_2Si$, $(CH_3)_2Ge$, $(C_6H_5)_2Si$, $CH_2CH_2$, $CH_2$, $C(CH_3)_2$, $(C_6H_5)_2C$ ist, besonders bevorzugt $(CH_3)_2Si$, $CH_2$ und $CH_2CH_2$ ist.

Die Ansa-Monoaryloxy-Bisindenyl-Metallocene der Formel (IV), die Pseudo-Rac-Form, wird gegenüber der entsprechenden Pseudo-Meso-Form bevorzugt gebildet, wenn speziell substituierte Aryloxyreste in der Übergangsnietallverbindung der Formel (Ia) verwendet werden,

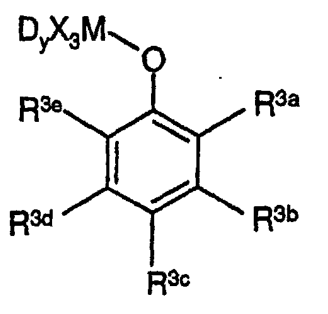

**(Ia)**

wobei

M Ti, Zr oder Hf, besonders bevorzugt Zirkonium ist,

X ein Halogenatom, insbesondere Chlor, ist,

D ein neutraler lewisbasischer Ligand ist, bevorzugt ein linearer, cyclischer oder verzweigter Sauerstoff-, Schwefel-, Stickstoff- oder Phosphor-haltiger Kohlenwasserstoff, besonders bevorzugt ein Ether, Polyether, Amin oder Polyamin,

$R^{3a}$ Halogen oder $Si(R^{12})_3$ ist, worin $R^{12}$ gleich oder verschieden ein Wasserstoffatom oder eine $C_1$-$C_{14}$-kohlenstoffhaltige Gruppe, bevorzugt $C_1$-$C_4$-Alkyl, $C_1$-$C_4$-Alkoxy, $C_6$-$C_{10}$-Aryl, $C_6$-$C_{10}$-Fluoraryl, $C_6$-$C_{10}$-Aryloxy, $C_2$-$C_{10}$-Alkenyl, $C_7$-$C_{14}$-Arylalkyl oder $C_7$-$C_{14}$-Alkylaryl,
oder $R^{3a}$ eine $C_1$-$C_{30}$ - kohlenstoffhaltige Gruppe, bevorzugt $C_1$-$C_{25}$-Alkyl, wie Methyl, Ethyl, iso-Propyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_1$-$C_{10}$-Alkyloxy, $C_6$-$C_{10}$-Aryloxy, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,

$R^{3b}$ bis $R^{3e}$ gleich oder verschieden Wasserstoff, Halogen oder eine $C_1$-$C_{30}$ - kohlenstoffhaltige Gruppe, bevorzugt $C_1$-$C_{25}$-Alkyl, wie Methyl, Ethyl, iso-Propyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_1$-$C_{10}$-Alkyloxy, $C_6$-$C_{10}$-Aryloxy, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl sind, oder zwei oder mehrere Reste $R^{3a}$ bis $R^{3e}$ können so miteinander verbunden sein, daß die Reste $R^3$ und die sie verbindenden Atome des Benzolringes ein $C_4$ bis $C_{24}$-Ringsystem bilden, welches seinerseits substituiert sein kann, und

y eine Zahl zwischen 0 und 2 ist.

Die bevorzugte Bildung (stereoselektive Reaktion) der Pseudo-Rac-Form (IV) gegenüber der Pseudo-Meso-Form (IVa) bedeutet, daß im Metallocen-Rohprodukt nach der Synthese das Verhältnis von Pseudo-Rac/Pseudo-Meso größer 1 ist, bevorzugt größer 2, besonders bevorzugt größer 4 und ganz besonders bevorzugt größer 8 ist.

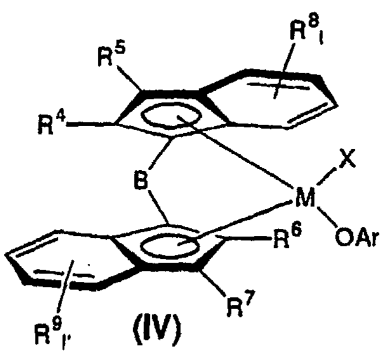

(IV)

pseudo-rac

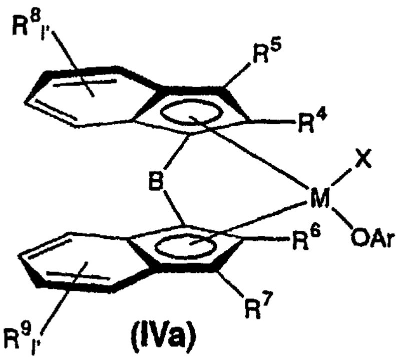

(IVa)

pseudo-meso

Besonders bevorzugt werden bei dem stereoselektiven Verfahren zur Herstellung von Verbindungen der Formel (IV) Übergangsmetallverbindungen der Formel (Ia) eingesetzt,
wobei

M Zirkonium ist,

X Chlor ist,

D ein neutraler Sauerstoff- oder Stickstoffhaltiger lewisbasischer Ligand ist, bevorzugt ein Ether, Polyether, Amin oder Polyamin, wie beispielsweise Diethylether, Dibutylether, 1,2-Dimethoxyethan, Tetrahydrofuran oder N,N,N',N'-Tetramethylethylendiamin

$R^{3a}$ Halogen oder eine $C_1$-$C_{10}$ - kohlenstoffhaltige Gruppe, bevorzugt $C_1$-$C_8$-Alkyl, wie Methyl, Ethyl, iso-Propyl, tert.-Butyl, Cyclohexyl oder Octyl, $C_2$-$C_8$-Alkenyl, $C_3$-$C_8$-Alkylalkenyl, $C_6$-$C_{10}$-Aryl, $C_5$-$C_9$-Heteroaryl, $C_1$-$C_4$-Alkyloxy, $C_6$-Aryloxy, $C_7$-$C_{10}$-Arylalkyl, $C_7$-$C_{10}$-Alkylaryl, ist

$R^{3b}$ bis $R^{3e}$ gleich oder verschieden Wasserstoff, Halogen oder eine $C_1$-$C_{10}$ - kohlenstoffhaltige Gruppe, bevorzugt $C_1$-$C_8$-Alkyl, wie Methyl, Ethyl, iso-Propyl, tert.-Butyl, Cyclohexyl oder Octyl, $C_2$-$C_8$-Alkenyl, $C_3$-$C_8$-Al-

kylalkenyl, $C_6$-$C_{10}$-Aryl, $C_5$-$C_9$-Heteroaryl, $C_1$-$C_4$-Alkyloxy, $C_6$-Aryloxy, $C_7$-$C_{10}$-Arylalkyl, $C_7$-$C_{10}$-Alkylaryl, ist oder zwei oder mehrere Reste $R^{3a}$ bis $R^{3e}$ können so miteinander verbunden sein, daß die Reste $R^3$ und die sie verbindenden Atome des Benzolringes ein $C_4$ bis $C_8$-Ringsystem bilden, welches seinerseits substituiert sein kann, und

y eine Zahl zwischen 0 und 2 ist.

Ganz besonders bevorzugt werden bei dem stereoselektiven Verfahren zur Herstellung von Verbindungen der Formel (IV) Übergangsmetallverbindungen der Formel (Ia) eingesetzt,
wobei

M Zirkonium ist,

X Chlor ist,

D Tetrahydrofuran, 1,2-Dimethoxyethan oder N,N,N',N'-Tetramethylethylendiamin ist,

$R^{3a}$ Chlor, Brom oder eine $C_1$-$C_{10}$ - kohlenstoffhaltige Gruppe, bevorzugt $C_1$-$C_6$-Alkyl, wie Methyl, Ethyl, iso-Propyl, tert.-Butyl oder Cyclohexyl, $C_2$-$C_4$-Alkenyl, $C_6$-$C_{10}$-Aryl, ist

$R^{3b}$ bis $R^{3d}$ gleich oder verschieden Wasserstoff, Chlor, Brom oder eine $C_1$-$C_{10}$ - kohlenstoffhaltige Gruppe, bevorzugt $C_1$-$C_6$-Alkyl, wie Methyl, Ethyl, iso-Propyl, tert.-Butyl oder Cyclohexyl, $C_2$-$C_4$-Alkenyl, $C_6$-$C_{10}$-Aryl, ist oder zwei oder mehrere Reste $R^{3a}$ bis $R^{3e}$ können so miteinander verbunden sein, daß die Reste $R^3$ und die sie verbindenden Atome des Benzolringes ein $C_4$ bis $C_6$-Ringsystem bilden, welches seinerseits substituiert sein kann, und

y eine Zahl zwischen 0 und 2 ist.

Die Synthese von Übergangsmetallverbindungen der Formeln (I) und (Ia) ist prinzipiell literaturbekannt (M. Mitani et al., Polymer Bulletin 34 (1995), Seiten 199 bis 202; H. Yasuda et al., J. Organomet. Chem. 493 (1994), Seiten 105 bis 116).

Die Darstellung kann nach folgenden beiden Wegen erfolgen:

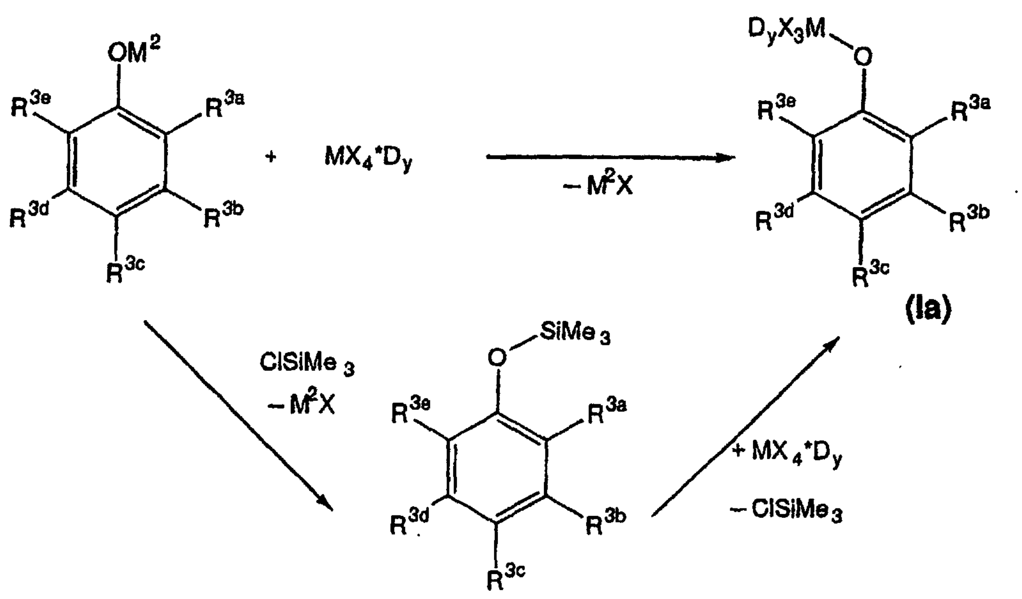


(Ia)

wobei die Symbole und Indices die gleiche Bedeutung wie oben haben.

Im ersten Fall wird ein Alkali- oder Erdalkali-Aryloxy-Salz direkt mit einem Tetrahalogenid der 4. Nebengruppe des Periodensystems der Elemente, wie Titan-, Zirkonium- oder Hafniumtetrachlorid, vorteilhaft in Form des Bis-THF-Adduktes zur Verbindung (Ia) umgesetzt.

Im zweiten Fall wird das Alkali- oder Erdalkali-Aryloxy-Salz zunächst mit einem Silylchlorid, wie beispielsweise Trimethylsilylchlorid, zum Silylether umgesetzt, der nach möglicher Isolierug dann mit einem Tetrahalogenid der 4. Nebengruppe des Periodensystems der Elemente, wie Titan-, Zirkonium- oder Hafniumtetrachlorid, vorteilhaft in Form des Bis-THF-Adduktes zur Verbindung (Ia) umgesetzt wird.

Die Übergangsmetallverbindungen der Formeln (I) und (Ia) können nach Abtrennung der gebildeten Salze ($M^2X$) und/oder Entfernen des substituierten Chlorsilans in der Regel durch Auskristallisieren erhalten werden.

Die Alkali- oder Erdalkali-Aryloxy-Salze lassen sich durch Deprotonierung der entsprechenden Hydroxyaromaten mit einer geeigneten Base, wie zum Beispiel Butyllithium, Methyllithium, Natriumhydrid, Kaliumhydrid, Natrium, Kalium oder Grignardverbindungen in einem inerten Lösungsmittel oder Lösungsmittelgemisch herstel-len.

Nichteinschränkende Beispiele für geeignete inerte Lösungsmittel sind aliphatische oder aromatische Kohlenwasserstoffe wie beispielsweise Benzol, Toluol, Xylol, Mesitylen, Ethylbenzol, Chlorbenzol, Dichlorbenzol, Fluorbenzol, Dekalin, Tetralin, Pentan, Hexan, Cyclohexan, Heptan, 1,2-Dichlorethan, Dichlormethan, Ether wie Diethylether, Di-n-Butylether, tert.-Butyl-methylether (MTBE), Tetrahydrofuran (THF), 1,2-Dimethoxyethan (DME), Anisol, Triglyme, Dioxan sowie beliebige Gemische aus jenen Stoffen. Nichteinschränkende Beispiele für Lösungsmittelge-mische sind Toluol, Hexan, Heptan, Xylol, Tetrahydrofuran (THF), Dimethoxyethan (DME), Toluol/THF, Heptan/DME oder Toluol/DME.

Die Reaktionen werden in einem Temperaturbereich von -78 bis 150°C, bevorzugt 0 bis 110°C durchgeführt.

Erläuternde, jedoch nicht einschränkende Beispiele für die Hydroxyaromaten, die zur Herstellung der bei den erfindungsgemäßen Verfahren einsetzbaren Übergangsmetallverbindungen der Formel (I) und (Ia) verwendet werden können, sind:

2,4-Di-tert.-butyl-phenol; 2,6-Di-tert.-butyl-phenol; 3,5-Ditert.-butyl-phenol; 2,6-Di-sec.-butyl-phenol; 2,4-Dimethylphenol; 2,3-Dimethylphenol; 2,5-Dimethylphenol; 2,6-Dimethylphenol; 3,4-Dimethylphenol; 3,5-Dimethylphenol; Phenol; 2-Methylphenol; 3-Methylphenol; 4-Methylphenol; 2-Ethylphenol; 3-Ethylphenol; 4-Ethylphenol; 2-sec.-Butylphenol; 2-tert.-Butylphenol; 3-tert.-Butylphenol; 4-sec.-Butylphenol; 4-tert.-Butylphenol; 2-Isopropyl-5-methylphenol; 4-Isopropyl-3-methylphenol; 5-Isopropyl-2-methylphenol; 5-Isopropyl-3-methylphenol; 2,4-Bis-(2-methyl-2-butyl)-phenol; 2,6-Di-tert.-butyl-4-methylphenol; 4-Nonylphenol; 2-Isopropylphenol; 3-Isopropylphenol; 4-Isopropylphenol; 2-Propylphenol;

4-Propylphenol; 2,3,5-Trimethylphenol; 2,3,6-Trimethylphenol;

2,4,6-Trimethylphenol; 3,4,5-Trimethylphenol; 2-tert.-Butyl-4-methylphenol; 2-tert.-Butyl-5-methylphenol; 2-tert. -Butyl-6-methylphenol; 4-(2-Methyl-2-butyl)-phenol;

2-tert.-Butyl-4-ethylphenol; 2,6-Diisopropylphenol; 4-Octylphenol; 4-(1,1,3,3-Tetramethylbutyl)-phenol; 2,6-Ditert.-butyl-4-ethylphenol; 4-sec.-Butyl-2,6-di-tert.-butylphenol; 4-Dodecylphenol; 2,4,6-Tri-tert.-butylphenol; 3-(Pentadecyl)-phenol;

2-Methyl-1-naphthol;

1-Naphthol; 2-Naphthol; 1-Acenaphthenol; 2-Hydroxybiphenyl; 3-Hydroxybiphenyl; 4-Hydroxybiphenyl; Hydroxypyridine; Hydroxychinoline; 2-Hydroxycarbazol; Hydroxychinaldine; 8-Hydroxychinazolin; 2-Hydroxychinoxalin; 2-Hydroxydibenzofuran;

2-Hydroxydiphenylmethan, 1-Hydroxyisochinoline, 5,6,7,8-Tetrahydro-1-naphthol;

Bei dem erfindungsgemäßen Verfahren zur Herstellung von Metallocenen der Formeln (II) und (IV) können die Übergangsmetallverbindungen der Formeln (1) und (Ia) in isolierter Form oder so, wie sie nach ihrer Herstellung als Lösung oder Suspension anfallen, eingesetzt werden. Die in der weiteren Reaktion störenden, reaktiven Nebenprodukte wie Trimethylchlorsilan sollten vor der Umsetzung mit den substituierten Cyclopentadienylanionen entfernt werden.

Erläuternde, die Erfindung jedoch nicht einschränkende Beispiele für Übergangs-metallverbindungen der Formel (Ia), die zur Herstellung, insbesondere zur stereoselektiven Herstellung, der Metallocene der Formel (IV) eingesetzt werden können, sind:

$Cl_3Zr(O\text{-}2,4\text{-}(tert.\text{-}Bu)_2C_6H_3)\ (THF)_2$, $Cl_3Zr(O\text{-}2,6\text{-}(tert.\text{-}Bu)_2C_6H_3)\ (THF)_2$, $Cl_3Zr(O\text{-}3,5\text{-}(tert.\text{-}Bu)_2C_6H_3)(THF)_2$, $Cl_3Zr(O\text{-}2,6\text{-}Me_2C_6H_3)\ (THF)_2$, $Cl_3Zr(O\text{-}2,4\text{-}Me_2C_6H_3)\ (THF)_2$,

$Cl_3Zr(O\text{-}2,3\text{-}Me_2C_6H_3)(THF)_2$, $Cl_3Zr(O\text{-}3,5\text{-}Me_2C_6H_3)(THF)_2$,
$Cl_3Zr(O\text{-}2\text{-}Me\text{-}C_6H_4)(THF)_2$, $Cl_3Zr(O\text{-}2\text{-}Et\text{-}C_6H_4)(DME)$,
$Cl_3Zr(O\text{-}2\text{-}iso\text{-}Prop\text{-}C_6H_4)(DME)$, $Cl_3Zr(O\text{-}2\text{-}n\text{-}Prop\text{-}C_6H_4)(THF)_2$,
$Cl_3Zr(O\text{-}2\text{-}sec.\text{-}Bu\text{-}C_6H_4)(DME)$, $Cl_3Zr(O\text{-}2\text{-}tert.\text{-}Bu\text{-}C_6H_4)(THF)_2$,
$Cl_3Zr(O\text{-}2\text{-}iso\text{-}Prop\text{-}5\text{-}Me\text{-}C_6H_3)(THF)_2$, $Cl_3Zr(O\text{-}2,4,6\text{-}Me_3C_6H_2)(THF)_2$,
$Cl_3Zr(O\text{-}2\text{-}tert.\text{-}Bu\text{-}6\text{-}Me\text{-}C_6H_3)(DME)$, $Cl_3Zr(O\text{-}2,6\text{-}(iso\text{-}Prop)_2\text{-}C_6H_3)(THF)_2$,
$Cl_3Zr(O\text{-}(1\text{-}Naphthyl))(DME)$, $Cl_3Zr(O\text{-}2\text{-}Ph\text{-}C_6H_4)(THF)_2$,

Nach den erfindungsgemäßen Verfahren können prinzipiell verschiedene Metallocentypen hergestellt werden, beispielsweise verbrückte oder unverbrückte Biscyclopentadienylkomplexe, wie sie z.B. in EP 129 368, EP 561 479, EP 545 304 und EP 576 970 beschrieben sind, Monocyclopentadienylkomplexe wie verbrückte Amidocyclopentadienylkomplexe, die z.B. in EP 416 815 beschrieben sind, mehrkernige Cyclopentadienylkomplexe wie in EP 632 063 beschrieben, $\pi$-Ligand substituierte Tetrahydropentalene wie in EP 659 758 beschrieben oder $\pi$-Ligand substituierte Tetrahydroindene wie in EP 661 300 beschrieben.

Vorzugsweise werden nach den erfindungsgemäßen Verfahren solche Metallocene hergestellt, die bei ihrer Synthese als Diastereomere anfallen können, wobei es sich besonders bevorzugt um Ansa-Metallocen der Formel (IV) handelt.

Die bei dem erfindungsgemäßen Verfahren zur stereoselektiven Herstellung von gut löslichen Monoaryloxy-Bisindenyl-Metallocenen der Formel (IV) eingesetzten Ligandausgangsverbindungen (V) werden durch zweifache Deprotonierung der entsprechenden Bisindenylverbindung (Va) in einem inerten Lösungsmittel oder Lösungsmittelgemisch hergestellt.

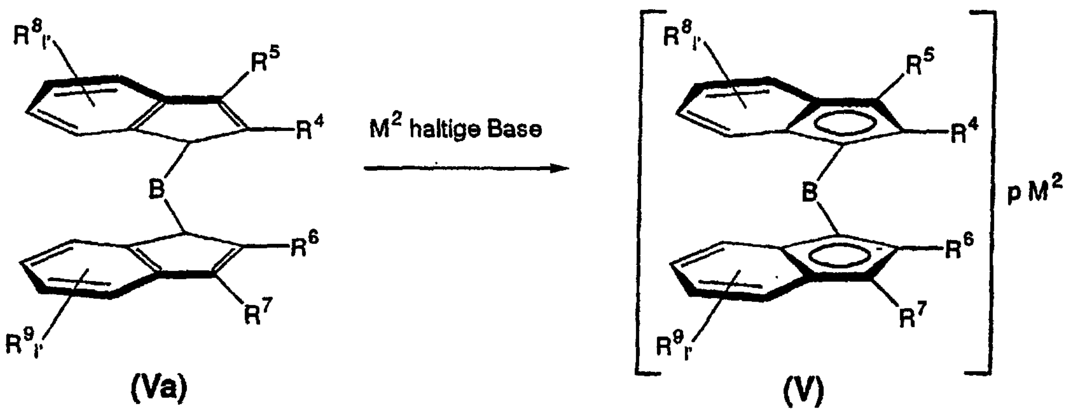


(Va) (V)

wobei die Symbole und Indices die gleiche Bedeutung wie oben haben.

Nicht einschränkende Beispiele für geeignete Basen sind Organolithium-Verbindungen wie n-Butyllithium, sec.-Butyllithium, tert.-Butyllithium, Methyllithium, Organomagnesium-Verbindungen, Alkalimetalle wie Natrium, Kalium, Alkalimetallhydride wie Natriumhydrid, Kaliumhydrid oder Alkalimetallamide wie Lithiumamid, Na-triumamid, Kaliumamid, Lithiumhexamethyl-disilazid, Natriumhexamethyl-disilazid, Kaliumhexamethyl-disilazid, Lithiumdiisoproplyamid oder Lithiumdiethylamid.

Geeignete inerte Lösungsmittel sind aliphatische oder aromatische Kohlenwasserstoffe wie beispielsweise Benzol, Toluol, Xylol, Mesitylen, Ethylbenzol, Chlorbenzol, Dichlorbenzol, Fluorbenzol, Dekalin, Tetralin, Pentan, Hexan, Cyclohexan, Heptan, 1,2-Dichlorethan. Dichlormethan, Ether wie Diethylether, Di-n-Butylether, tert.-Butyl-methylether (MTBE), Tetrahydrofuran (THF), 1,2-Dimethoxyethan (DME), Anisol, Triglyme, Dioxan sowie beliebige Gemische aus jenen Stoffen. Bevorzugt werden Lösungsmittel oder Lösungsmittelgemische in denen ebenfalls direkt die anschließende Umsetzung zum Metallocenkomplex der Formel (IV) durchgeführt werden kann. Nichteinschränkende Beispiele hierfür sind Toluol, Hexan, Heptan, Xylol, Tetrahydrofuran (THF), Dimethoxyethan (DME), Toluol/THF, Heptan/DME oder Toluol/DME.

Die Deprotonierung der verbrückten Bisindenyl-Liganden der Formel (Va) wird in einem Temperaturbereich von -78 bis 150°C durchgeführt, bevorzugt in einem Temperaturbereich von 0 bis 110°C.

Das molare Verhältnis zwischen den oben beschriebenen geeigneten Basen und den verbrückten Bisindenyl-Liganden der Formel (Va) liegt im allgemeinen zwischen 10 und 0.1, bevorzugt zwischen 4 und 0.5, besonders bevorzugt zwischen 3 und 0.8.

Bei dem erfindungsgemäßen Verfahren können als Bisindenyl-Liganden solche eingesetzt werden, wie sie

in EP-A-0485823, EP-A-0549900, EP-A-0576970, WO 98/22486 und WO 98/40331 zur Herstellung der entsprechenden Metallocendi-chloride beschrieben werden.

Erläuternde jedoch nicht einschränkende Beispiele für. bevorzugte bei dem erfindungsgemäßen Verfahren zur stereoselektiven Herstellung von gut löslichen Ansa-Monoaryloxy-Bisindenyl-Metallocenen der Formel (IV) einsetzbaren verbrückten Bisindenyl-Liganden der Formel (Va) sind:

Dimethyl-bis-(2-methyl-indenyl)-silan
1,1-Bis-(2-methyl-indenyl)-methan
2,2-Bis(2-methyl-indenyl)-propan
Dimethyl-bis-(2-methyl-benzo-indenyl)-silan
Dimethyl-bis-(4-naphthyl-indenyl)-silan
Dimethyl-bis-(2-methyl-4-(1-naphthyl)-indenyl)-silan
1,1-Bis-(2-methyl-4-(1-naphthyl)-indenyl)-methan
2,2-Bis(-2-methyl-4-(1-naphthyl)-indenyl)-propan
Dimethyl-bis-(2-methyl-4-(2-naphthyl)-indenyl)-silan
Dimethyl-bis-(2-methyl-4-phenyl-indenyl)-silan
1,1-Bis-(2-methyl-4-phenyl-indenyl)-methan
2,2-Bis-(2-methyl-4-phenyl-indenyl)-propan
Dimethyl-bis-(2-methyl-4-t-butyl-indenyl)-silan
Dimethyl-bis-(2-methyl-4-isopropyl-indenyl)-silan
Dimethyl-bis-(2-methyl-4-ethyl-indenyl)-silan
Dimethyl-bis-(2,4-dimethyl-indenyl)-silan
Dimethyl-bis-(2-ethyl-indenyl)-silan
Dimethyl-bis-(2-ethyl-4-ethyl-indenyl)-silan
Dimethyl-bis- (2-ethyl-4-phenyl-indenyl)-silan
Dimethyl-bis-(2-methyl-4,5-benzo-indenyl)-silan
1,1-Bis-(2-methyl-4,5-benzo-indenyl)-methan
2,2-Bis-(2-methyl-4,5-benzo-indenyl)-propan
Dimethyl-bis-(2-methyl-4,6 diisopropyl-indenyl)-silan
Dimethyl-bis-(2-methyl-4,5 diisopropyl-indenyl)-silan
Dimethyl-bis-(2,4,6-trimethyl-indenyl)-silan
Dimethyl-bis-(2,5,6-trimethyl-indenyl)-silan
Dimethyl-bis-(2,4,7-trimethyl-indenyl)-silan
Dimethyl-bis-(2-methyl-5-isobutyl-indenyl)-silan
Dimethyl-bis-(2-methyl-5-t-butyl-indenyl)-silan
Methyl (phenyl)-bis-(2-methyl-4-phenyl-indenyl)-silan
Methyl (phenyl)-bis-(2-methyl-4,6 diisopropyl-indenyl)-silan
Methyl (phenyl)-bis-(2-methyl-4-isopropyl-indenyl)-silan
Methyl (phenyl)-bis-(2-methyl-4,5-benzo-indenyl)-silan
Methyl (phenyl)-bis-(2-methyl-4,5-(methylbenzo)-indenyl)-silan
Methyl (phenyl)-bis-(2-methyl-4,5-(tetramethylbenzo)-indenyl)-silan
Methyl (phenyl)-bis-(2-methyl-indenyl)-silan
Methyl (phenyl)-bis-(2-methyl-5-isobutyl-indenyl)-silan
1,2-Bis-(2-methyl-4-phenyl-indenyl)- ethan
1,2-Bis-(2-methyl-4,6 diisopropyl-indenyl)-ethan
1,2-Bis-(2-methyl-4,5-benzo-indenyl)-ethan
1,2-Bis-(2,4,7-trimethyl-indenyl)-ethan
1,2-Bis-(2-methyl-indenyl)-ethan
Dimethyl-bis-(2-methyl-4-(tert-butyl-phenyl-indenyl)-silan
Dimethyl-bis-(2-methyl-4-(4-trifluormethyl-phenyl-indenyl)-silan
Dimethyl-bis-(2-methyl-4-(4-methoxy-phenyl-indenyl)-silan
Dimethyl-bis-(2-ethyl-4-(4-tert-butyl-phenyl-indenyl)-silan
Dimethyl-bis-(2-ethyl-4-(4-methyl-phenyl-indenyl)-silan
Dimethyl-bis-(2-ethyl-4-(4-ethyl-phenyl-indenyl)-silan
Dimethyl-bis-(2-ethyl-4-(4-trifluormethyl-phenyl-indenyl)-silan
Dimethyl-bis-(2-ethyl-4-(4-methoxy-phenyl-indenyl)-silan
Dimethyl-bis-(2-methyl-4-(4'-tert.-butyl-phenyl)-indenyl)-silan
Dimethyl-bis-(2-methyl-4-(3',5'-di-tert.-butyl-phenyl)-indenyl)-silan

1,1-Bis-(2-methyl-4-(4'-tert.-butyl-phenyl)-indenyl)-methan
2,2-Bis-(2-methyl-4- (4'-tert.-butyl-phenyl) -indenyl)-propan
Dimethyl-bis-(2-methyl-4-(4'-methyl-phenyl)-indenyl)-silan
Dimethyl-bis-(2-methyl-4-(4'-ethyl-phenyl)-indenyl)-silan
Dimethyl-bis-(2-methyl-4-(4'-n-propyl-phenyl)-indenyl) -silan
Dimethyl-bis-(2-methyl-4-(4'-iso-propyl-phenyl)-indenyl)-silan
Dimethyl-bis-(2-methyl-4-(4'-n-butyl-phenyl)-indenyl)-silan
Dimethyl-bis-(2-methyl-4-(4'-hexyl-phenyl)-indenyl)-silan
Dimethyl-bis-(2-methyl-4-(4'-sec-butyl-phenyl)-indenyl)-silan
Dimethyl-bis-(2-ethyl-4-phenyl)-indenyl)-silan
Dimethyl-bis-(2-ethyl-4-(4'-methyl-phenyl)-indenyl)-silan
Dimethyl-bis-(2-ethyl-4-(4'-ethyl-phenyl)-indenyl)-silan
Dimethyl-bis-(2-ethyl-4-(4'-n-propyl-phenyl)-indenyl)-silan
Dimethyl-bis-(2-ethyl-4-(4'-iso-propyl-phenyl)-indenyl)-silan
Dimethyl-bis-(2-ethyl-4-(4'-n-butyl-phenyl)-indenyl)-silan
Dimethyl-bis-(2-ethyl-4-(4'-hexyl-phenyl)-indenyl)-silan
Dimethyl-bis-(2-ethyl-4-(4'-pentyl-phenyl)-indenyl)-silan
Dimethyl-bis-(2-ethyl-4-(4'-cyclohexyl-phenyl)-indenyl)-silan
Dimethyl-bis-(2-ethyl-4-(4'-sec-butyl-phenyl)-indenyl)-silan
Dimethyl-bis-(2-ethyl-4-(4'-tert-butyl-phenyl)-indenyl)-silan
Dimethyl-bis-(2-ethyl-4-(3',5'-di-tert.-butyl-phenyl)-indenyl)-silan1, 1-Bis-(2-ethyl-4-(4'-tert.-butyl-phenyl)-indenyl)-methan
2,2-Bis-(2-ethyl-4-(4'-tert.-butyl-phenyl)-indenyl)-propan
Dimethyl-bis-(2-n-propyl-4-phenyl)-indenyl)-silan
Dimethyl-bis-(2-n-propyl-4-(4'-methyl-phenyl)-indenyl)-silan
Dimethyl-bis-(2-n-propyl-4-(4'-ethyl-phenyl)-indenyl)-silan
Dimethyl-bis- (2-n-propyl-4-(4'-n-propyl-phenyl)-indenyl)-silan
Dimethyl-bis-(2-n-propyl-4-(4'-iso-propyl-phenyl)-indenyl)-silan
Dimethyl-bis-(2-n-propyl-4-(4'-n-butyl-phenyl)-indenyl)-silan
Dimethyl-bis-(2-n-propyl-4-(4'-hexyl-phenyl)-indenyl)-silan
Dimethyl-bis-(2-n-propyl-4-(4'-cyclohexyl-phenyl)-indenyl)-silan
Dimethyl-bis-(2-n-propyl-4-(4'-sec-butyl-phenyl) -indenyl)-silan
Dimethyl-bis-(2-n-propyl-4-(4'-tert.-butyl-phenyl)-indenyl)-silan
Dimethyl-bis-(2-n-propyl-4-(3',5'-di-tert.-butyl-phenyl)-indenyl)-silan
1,1-Bis- (2-n-propyl-4-(4'-tert.-butyl-phenyl)-indenyl)-methan
2,2-Bis- (2-n-propyl-4-(4'-tert.-butyl-phenyl)-indenyl)-propan
Dimethyl-bis-(2-iso-propyl-4-phenyl)-indenyl)-silan
Dimethyl-bis-(2-iso-propyl-4-(4'-methyl-phenyl)-indenyl)-silan
Dimethyl-bis-(2-iso-propyl-4-(4'-ethyl-phenyl)-indenyl)-silan
Dimethyl-bis- (2-iso-propyl-4-(4'-n-propyl-phenyl)-indenyl) -silan
Dimethyl-bis-(2-iso-propyl-4- (4'-iso-propyl-phenyl)-indenyl)-silan
Dimethyl-bis-(2-iso-propyl-4-(4'-n-butyl-phenyl)-indenyl)-silan
Dimethyl-bis- (2-iso-propyl-4-(4'-hexyl-phenyl)-indenyl)-silan
Dimethyl-bis-(2-iso-propyl-4-(4'-cyclohexyl-phenyl)-indenyl)-silan
Dimethyl-bis-(2-iso-propyl-4-(4'-sec-butyl-phenyl)-indenyl)-silan
Dimethyl-bis-(2-iso-propyl-4-(4'-tert.-butyl-phenyl)-indenyl)-silan
1,1-Bis-(2-iso-propyl-4-(4'-tert.-butyl-phenyl)-indenyl)-methan
2,2-Bis-(2-iso-propyl-4-(4'-tert.-butyl-phenyl)-indenyl) -propan
Dimethyl-bis-(2-n-butyl-4-phenyl)-indenyl)-silan
Dimethyl-bis-(2-n-butyl-4-(4'-methyl-phenyl)-indenyl)-silan
Dimethyl-bis-(2-n-butyl-4-(4'-ethyl-phenyl)-indenyl) -silan
Dimethyl-bis-(2-n-butyl-4-(4'-n-propyl-phenyl)-indenyl)-silan
Dimethyl-bis-(2-n-butyl-4-(4'-iso-propyl-phenyl)-indenyl)-silan
Dimethyl-bis- (2-n-butyl-4- (4'-n-butyl-phenyl) -indenyl) -silan
Dimethyl-bis-(2-n-butyl-4-(4'-hexyl-phenyl)-indenyl)-silan
Dimethyl-bis-(2-n-butyl-4-(4'-cyclohexyl-phenyl)-indenyl)-silan
Dimethyl-bis-(2-n-butyl-4-(4'-sec-butyl-phenyl)-indenyl)-silan
Dimethyl-bis-(2-n-butyl-4-(4'-tert.-butyl-phenyl)-indenyl)-silan

Dimethyl-bis-(2-(2-methyl-propyl)-4-phenyl)-indenyl)-silan
Dimethyl-bis-(2-(2-methyl-propyl)-4-(4'-methyl-phenyl)-indenyl)-silan
Dimethyl-bis-(2-(2-methyl-propyl)-9-(4'-ethyl-phenyl)-indenyl)-silan
Dimethyl-bis- (2- (2-methyl-propyl) -4- (4'-n-propyl-phenyl)-indenyl)-silan
Dimethyl-bis-(2-(2-methyl-propyl)-4-(4'-iso-propyl-phenyl)-indenyl) -silan
Dimethyl-bis-(2-(2-methyl-propyl)-4-(4'-n-butyl-phenyl)-indenyl)-silan
Dimethyl-bis-(2-(2-methyl-propyl)-4-(4'-(2-methyl-propyl)-phenyl)-indenyl)-silan
Dimethyl-bis-(2-(2-methyl-propyl)-4-(4'-cyclo(2-methyl-propyl)-phenyl)-indenyl)-silan
Dimethyl-bis-(2-(2-methyl-propyl)-4-(4'-sec-butyl-phenyl)-indenyl)-silan
Dimethyl-bis-(2-(2-methyl-propyl)-4-(4'-tert.-butyl-phenyl)-indenyl)-silan
Dimethyl-bis-(2-ethyl-4-(4'-tert.-butyl-phenyl)-indenyl)-german
Dimethyl-bis-(2-methyl-4-(4'-tart.-butyl-phenyl)-indenyl)-german
1,2-Bis-(2-methyl-4-(4'-tert.-butyl-phenyl)-indenyl)-ethan
1,2-Bis-(2-ethyl-4-phenyl)-indenyl)-ethan
1,2-Bis-(2-ethyl-4-(4'-tert.-butyl-phenyl)-indenyl)-ethan
1,2-Bis-(2-n-propyl-4-phenyl)-indenyl)-ethan
1,2-Bis-(2-n-propyl-4-(4'-tert.-butyl-phenyl)-indenyl)-ethan
1,2-Bis-(2-iso-propyl-4-(4-phenyl)-indenyl)-ethan
1,2-Bis-(2-iso-propyl-4-(4'-tert.-butyl-phenyl)-indenyl)-ethan
1,2-Bis-(2-(2-methyl-propyl)-4-(4-phenyl)-indenyl)-ethan
1,2-Bis-(2- (2-methyl-propyl)-4-(4'-tert.-butyl-phenyl)-indenyl) -ethan
1-Methyl-1,2-bis(2-ethyl-4-(4'-tert.-butyl-phenyl)-indenyl)-ethan
Dimethyl-(2-methylazapentalen)(2-methyl-indenyl)-silan
Dimethyl-(2-methylazapentalen)(2-methyl-4-phenyl-indenyl)-silan
Dimethyl-(2-methylazapentalen)(2-methyl-4,5-benzo-indenyl)-silan
Dimethyl-(2-methylazapentalen)(2-ethyl-4-(4'-tert-butyl-phenylindenyl)-silan
Dimethyl-(2-methylazapentalen)(2-methyl-4-(9'-tert.-butyl-phenyl)-indenyl)-silan
Dimethyl-(2-methylazapentalen)(2-n-propyl-4-(4'-tert.-butyl-phenyl)-indenyl)-silan
Dimethyl-(2-ethylazapentalen)(2-methyl-4-phenyl-indenyl)-silan
Dimethyl-(2-ethylazapentalen)(2-methyl-4,5-benzo-indenyl)-silan
Dimethyl-(2-ethylazapentalen)(2-ethyl-4-(4'-tert-butyl-phenyl-indenyl)-silan
Dimethyl-(2-ethylazapentalen)(2-methyl-4-(4'-tert.-butyl -phenyl)-indenyl)-silan
Dimethyl-(2-ethylazapentalen)(2-n-propyl-4-(4'-tert.-butyl-phenyl)-indenyl)-silan
Dimethyl-(2-methylthiapentalen)(2-methyl-indenyl)-silan
Dimethyl-(2-methylthiapentalen)(2-methyl-4-phenyl-indenyl)-silan
Dimethyl-(2-methylthiapentalen)(2-methyl-4,5-benzo-indenyl)-silan
Dimethyl-(2-methylthiapentalen)(2-ethyl-4-(4'-tert.-butyl-phenyl)-indenyl)-silan
Dimethyl-(2-methylthiapentalen)(2-n-propyl-4-(4'-tert.-butyl-phenyl)-indenyl)-silan
Dimethyl-(2-ethylthiapentalen)(2-methyl-indenyl)-silan
Dimethyl-(2-ethylthiapentalen)(2-methyl-4-phenyl-indenyl)-silan
Dimethyl-(2-ethylthiapentalen)(2-methyl-4,5-benzo-indenyl)-silan
Dimethyl-(2-ethylthiapentalen)(2-ethyl-4-(4'-tert.-butyl-phenyl)-indenyl)-silan
Dimethyl-(2-ethylthiapentalen) (2-n-propyl-4-(4'-tert.-butyl-phenyl)-indenyl)-silan

Die verbrückten Bisindenyl-Liganden der Formel (Va) können entweder als isolierte Ausgangsprodukte in dem erfindungsgemäßen Verfahren eingesetzt werden, oder sie können ohne vorherige Isolierung als Rohprodukte, so wie sie bei ihrer Synthese anfallen, in dem erfindungsgemäßen Verfahren eingesetzt werden. Ein solches Eintopfverfahren zur Herstellung von Metallocendichloriden ist in DE 44 34 640 beschrieben.

Die Herstellung der Metallocene der Formel (IV) erfolgt bei dem erfindungsgemäßen Verfahren durch Umsetzung der Ligandausgangsverbindungen der Formel (V) mit Übergangsmetallverbindungen der Formel (Ia) in einem solchen inerten Lösungsmittel oder Lösungsmittelgemisch, in dem auch die Deprotonierung der substituierten Cyclopentadienderivate durchgeführt werden kann.

Geeignete inerte Lösungsmittel sind aliphatische oder aromatische Kohlenwasserstoffe wie beispielsweise Benzol, Toluol, Xylol, Mesitylen. Ethylbenzol, Chlorbenzol, Dichlorbenzol, Fluorbenzol, Dekalin, Tetralin, Pentan, Hexan, Cyclohexan, Heptan, 1,2-Dichlorethan, Dichlormethan, Ether wie Diethylether, Di-n-Butylether, tert.-Butyl-methylether (MTBE), Tetrahydrofuran (THF), 1,2-Dimethoxyethan (DME), Anisol, Triglyme, Dioxan sowie beliebige Gemische aus jenen Stoffen. Bevorzugt werden Lösungsmittel oder Lösungsmittelgemische in denen die Metallierung der Ligandausgangsverbindung der Formel (Va) und die anschließende Umsetzung zum Metallocenkomplex der Formel (IV)

durchgeführt werden kann. Nichteinschränkende Beispiele hierfür sind Toluol, Hexan, Heptan, Xylol, Tetrahydrofuran (THF), Dimethoxyethan (DME), Toluol/THF, Heptan/DME oder Toluol/DME.

Die Umsetzung der Ligandausgangsverbindungen der Formel (V) mit den Übergangsmetallverbindungen der Formel (Ia) zur Herstellung der Metallocene der Formel (IV) nach den erfindungsgemäßen Verfahren erfolgt im allgemeinen in einem Temperaturbereich von -78 bis 150°C, bevorzugt in einem Temperaturbereich von 0 bis 110°C, besonders bevorzugt bei einer Temperatur zwischen 20 und 60°C.

Das molare Verhältnis zwischen den Übergangsmetallverbindungen der Formel (Ia) und den Ligandvorstufen der Formel (V) liegt bei den erfindungsgemäßen Verfahren im allgemeinen zwischen 10 und 0.1, bevorzugt zwischen 2 und 0.5.

Die Konzentration an Ligandvorstufen der Formel (V) in der Reaktionsmischung liegt im allgemeinen zwischen 0,0001 mol/l und 8 mol/l, bevorzugt im Bereich 0.01 mol/l und 3 mol/l, besonders bevorzugt zwischen 0.1 mol/l und 2 mol/l.

Die Reaktionsdauer liegt im allgemeinen zwischen 5 Minuten und 1 Woche, bevorzugt im Bereich zwischen 15 Minuten und 24 Stunden.

Die bei den erfindungsgemäßen Verfahren gebildeten Metallocene der Formeln (II) und (IV) zeichnen sich dadurch aus, daß sie im Vergleich zu den entsprechenden Metallocenchloriden eine deutlich bessere Löslichkeit in inerten organischen Lösungsmitteln zeigen. Eine deutliche besser Löslichkeit soll bedeutet, daß sich die molaren Konzentrationen im organischen Lösungsmittel mindestens verdoppeln, bevorzugt mehr als vervierfachen und ganz besonders bevorzugt mehr als verachtfachen. Erläuternde, die Erfindung jedoch nicht einschränkende Beispiele für die bei dem erfindungsgemäßen stereoselektiven Verfahren erhältlichen Metallocene der Formel (IV) sind:

Dimethylsilandiyl-bis-(2-methyl-indenyl)-zirkonium-monochloromono-(2,6-di-methyl-phenolat)
Dimethylsilandiyl-bis-(2-methyl-4-(1-naphthyl)-indenyl)-zirkonium-monochloro-mono-(2,6-di-methyl-phenolat)
Dimethylsilandiyl-bis-(2-methyl-4-phenyl-indenyl)-zirkonium-monochloro-mono-(2,6-di-methyl-phenolat)
Dimethylsilandiyl-bis-(2-ethyl-indenyl)-zirkonium-monochloromono-(2,6-di-methyl-phenolat)
Dimethylsilandiyl-bis-(2-ethyl-4-phenyl-indenyl)-zirkonium-monochloro-mono-(2,6-di-methyl-phenolat)
Dimethylsilandiyl-bis-(2-methyl-4,5-benzo-indenyl)-zirkonium-monochloro-mono-(2,6-di-methyl-phenolat)
Dimethylsilandiyl-bis-(2-methyl-4,6 diisopropyl-indenyl)-zirkonium-monochloro-mono-(2,6-di-methyl-phenolat)
Dimethylsilandiyl-bis-(2,4,6-trimethyl-indenyl)-zirkonium-monochloro-mono-(2,6-di-methyl-phenolat)
Dimethylsilandiyl-bis-(2,5,6-trimethyl-indenyl)-zirkonium-monochloro-mono-(2,6-di-methyl-phenolat)
Dimethylsilandiyl-bis-(2,4,7-trimethyl-indenyl)-zirkonium-monochloro-mono-(2,6-di-methyl-phenolat)
Dimethylsilandiyl-bis-(2-methyl-5-isobutyl-indenyl)-zirkonium-monochloro-mono-(2,6-di-methyl-phenolat)
Dimethylsilandiyl-bis-(2-methyl-5-t-butyl-indenyl)-zirkonium-monochloro-mono-(2,6-di-methyl-phenolat)
1,2-Ethandiyl-bis-(2-methyl-4-phenyl-indenyl)-zirkonium-monochloro-mono-(2,6-di-methyl-phenolat)
1,2-Ethandiyl-bis-(2-methyl-4,5-benzo-indenyl)-zirkonium-monochloro-mono-(2,6-di-methyl-phenolat)
1,2-Ethandiyl-bis-(2,4,7-trimethyl-indenyl)-zirkonium-monochloromono-(2,6-di-methyl-phenolat)
1,2-Ethandiyl-bis-(2-methyl-indenyl)-zirkonium-monochloromono-(2,6-di-methyl-phenolat)
Dimethylsilandiyl-bis-(2-methyl-4-(4'-tert.-butyl-phenyl)-indenyl)-zirkonium-monochloro-mono-(2,6-di-methyl-phenolat)
Dimethylsilandiyl-bis-(2-methyl-4-(3',5'-di-tert.-butyl-phenyl)-indenyl)-zirkonium-monochloro-mono-(2,6-di-methyl-phenolat)
Methyliden-bis-(2-methyl-4-(4'-tert.-butyl-phenyl)-indenyl) -zirkonium-monochloro-mono-(2,6-di-methyl-phenolat)
Isopropyliden-bis-(2-methyl-4-(4'-tert.-butyl-phenyl)-indenyl) -zirkonium-monochloro-mono-(2,6-di-methyl-phenolat)
Dimethylsilandiyl-bis-(2-methyl-4-(4'-methyl-phenyl)-indenyl)-zirkonium-monochloro-mono-(2,6-di-methyl-phenolat)
Dimethylsilandiyl-bis-(2-ethyl-4-phenyl)-indenyl)-zirkonium-monochloro-mono-(2,6-di-methyl-phenolat)
Dimethylsilandiyl-bis-(2-ethyl-4-(4'-methyl-phenyl)-indenyl)-zirkonium-monochloro-mono-(2,6-di-methyl-phenolat)
Dimethylsilandiyl-bis-(2-ethyl-4-(4'-tert.-butyl-phenyl)-indenyl)-zirkonium-monochloro-mono-(2,6-di-methyl-phenolat)
Dimethylsilandiyl-bis-(2-ethyl-4-(3',5'-di-tert.-butyl-phenyl)-indenyl)-zirkonium-monochloro-mono-(2,6-di-methyl-phenolat)
Methyliden-bis-(2-ethyl-4-(4'-tert.-butyl-phenyl)-indenyl)-zirkonium-monochloro-mono-(2,6-di-methyl-phenolat)
Isopropyliden-bis-(2-ethyl-4-(4'-tert.-butyl-phenyl)-indenyl)-zirkonium-monochloro-mono-(2,6-di-methyl-phenolat)
Dimethylsilandiyl-bis-(2-n-propyl-4-phenyl)-indenyl)-zirkoniummonochloro-mono-(2,6-di-methyl-phenolat)
Dimethylsilandiyl-bis-(2-n-propyl-4-(4'-methyl-phenyl)-indenyl)-zirkonium-monochloro-mono-(2,6-di-methyl-phenolat)

Dimethylsilandiyl-bis-(2-n-propyl-4-(4'-tert-butyl-phenyl)-indenyl)-zirkonium-monochloro-mono-(2,6-di-methyl-phenolat)
Dimethylsilandiyl-bis-(2-n-propyl-4-(3',5'-di-tert.-butyl-phenyl)-indenyl)-zirkonium-monochloro-mono-(2,6-di-methyl-phenolat)
Methyliden-bis-(2-n-propyl-4-(4'-tert.-butyl-phenyl)-indenyl) -zirkonium-monochloro-mono-(2,6-di-methyl-phenolat)
Isopropyliden-bis-(2-n-propyl-4-(4'-tert.-butyl-phenyl)-indenyl) -zirkonium-monochloro-mono-(2,6-di-methyl-phenolat)
Dimethylsilandiyl-bis-(2-iso-propyl-4-phenyl)-indenyl)-zirkoniummonochloro-mono-(2,6-di-methyl-phenolat)
Dimethylsilandiyl-bis-(2-iso-propyl-4-(4'-methyl-phenyl)-indenyl)-zirkonium-monochloro-mono-(2,6-di-methyl-phenolat)
Dimethylsilandiyl-bis-(2-iso-propyl-4-(4'-tert.-butyl-phenyl)-indenyl)-zirkonium-monochloro-mono-(2,6-di-methyl-phenolat)
Methyliden-bis-(2-iso-propyl-4-(4'-tert.-butyl-phenyl)-indenyl)-zirkonium-monochloro-mono-(2,6-di-methyl-phenolat)
Isopropyliden-bis-(2-iso-propyl-4-(4'-tert.-butyl-phenyl)-indenyl)-zirkonium-monochloro-mono-(2,6-di-methyl-phenolat)
Dimethylsilandiyl-bis-(2-n-butyl-4-phenyl)-indenyl)-zirkonium-monochloro-mono- (2,6-di-methyl-phenolat)
Dimethylsilandiyl-bis-(2-n-butyl-4-(4'-methyl-phenyl)-indenyl)-zirkonium-monochloro-mono-(2,6-di-methyl-phenolat)
Dimethylsilandiyl-bis-(2-n-butyl-4-(4'-tert.-butyl-phenyl)-indenyl)-zirkonium-monochloro-mono-(2,6-di-methyl-phenolat)
Dimethylsilandiyl-bis-(2-(2-methyl-propyl)-4-phenyl)-indenyl)-zirkonium-monochloro-mono-(2,6-di-methyl-phenolat)
Dimethylsilandiyl-bis-(2-(2-methyl-propyl)-4-(4'-methyl-phenyl)-indenyl)-zirkonium-monochloro-mono-(2,6-di-methyl-phenolat)
Dimethylsilandiyl-bis-(2-(2-methyl-propyl)-4-(4'-tert.-butyl-phenyl)-indenyl)-zirkonium-monochloro-mono-(2,6-di-methyl-phenolat)
1,2-Ethandiyl-bis-(2-methyl-4-(4'-tert.-butyl-phenyl)-indenyl)-zirkonium-monochloro-mono-(2,6-di-methyl-phenolat)
1,2-Ethandiyl-bis-(2-ethyl-4-phenyl)-indenyl)-zirkonium-monochloro-mono-(2,6-di-methyl-phenolat)
1,2-Ethandiyl-bis-(2-ethyl-4-(4'-tert.-butyl-phenyl)-indenyl)-zirkonium-monochloro-mono-(2,6-di-methyl-phenolat)
1,2-Ethandiyl-bis-(2-n-propyl-4-phenyl)-indenyl)-zirkonium-monochloro-mono-(2,6-di-methyl-phenolat)
1,2-Ethandiyl-bis-(2-n-propyl-4-(4'-tert.-butyl-phenyl)-indenyl)-zirkonium-monochloro-mono-(2,6-di-methyl-phenolat)
1,2-Ethandiyl-bis-(2-iso-propyl-4-(4-phenyl)-indenyl)-zirkoniummonochloro-mono-(2,6-di-methyl-phenolat)
1,2-Ethandiyl-bis-(2-iso-propyl-4-(4'-tert.-butyl-phenyl)-indenyl)-zirkonium-monochloro-mono-(2,6-di-methyl-phenolat)
1,2-Ethandiyl-bis-(2-(2-methyl-propyl)-4-(4-phenyl)-indenyl)-zirkonium-monochloro-mono-(2,6-di-methyl-phenolat)
1,2-Ethandiyl-bis-(2-(2-methyl-propyl)-4-(4'-tert.-butyl-phenyl)-indenyl)-zirkonium-monochloro-mono-(2,6-di-methyl-phenolat)

Des weiteren sind die Metallocene, bei denen das Zirkoniumfragment "zirkonium-monochloro-mono-(2,6-dimethyl-phenolat)" in obiger Aufzählung die Bedeutung

-zirkonium-monochloro-mono-(2,4-di-tert.-butyl-phenolat), -zirkonium-monochloro-mono-(2-methyl-phenolat), -zirkonium-monochloromono-(2-iso-propyl-phenolat),

-zirkonium-monochloro-mono-(2,4-dimethyl-phenolat), -zirkoniummonochloro-mono-(2,3-dimethyl-phenolat), -zirkonium-monochloromono-(2,4,6-trimethyl-phenolat), -zirkonium-monochloromono-(2-iso-propyl-5-methyl-phenolat), -zirkonium-monochloromono- (2-tert.-butyl-6-methyl-phenolat), -zirkonium-monochloromono-(2,6-di-isopropyl-phenolat),-zirkonium-monochloromono-(2,6-di-tert.-butyl-phenolat),-zirkonium-monochloromono-(1-naphtholat) und-zirkonium-monochloro-mono-(2-phenyl-phenolat) hat, ebenfalls Beispiele für die bei dem erfindungsgemäßen stereoselektiven Verfahren erhältlichen Verbindungen der Formel (IV).

Nach dem erfindungsgemäßen Verfahren können leicht aufzureinigende Metallocen-Katalysatorkomponenten, insbesondere der Formel (IV), stereoselektiv hergestellt werden, die in gleicher Weise wie die aufwendig aufzureinigenden, als Rac/Meso 1:1-Gemische anfallenden, Ansa-Bisindenylzirkoniumdichloride als Katalysatorkomponente in der Propylenpolymerisation eingesetzt werden können.

Die bei den erfindungsgemäßen Verfahren erhältlichen Metallocene der Formeln (II) und (IV) eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallocen enthält. Unter dem Begriff Polymerisation wird eine Homopolymerisation wie auch eine Copolymerisation verstanden.

Die bei den erfindungsgemäßen Verfahren erhältlichen Metallocene der Formeln (II) und (IV), insbesondere der Formel (IV), können zur Polymerisation eines oder mehrerer Olefine der Formel $R^{\alpha}$-CH=CH-$R^{\beta}$ verwendet werden, worin $R^{\alpha}$ und $R^{\beta}$ gleich oder verschieden sind und ein Wasserstoffatom oder einen Kohlenwasserstoff mit 1 bis 20 C-Atomen, insbesondere 1 bis 10 C-Atomen, bedeuten, und $R^{\alpha}$ und $R^{\beta}$ zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden Ethylen oder Propylen homopolymerisiert, oder Ethylen mit einem oder mehreren cyclischen Olefinen, wie Norbornen , und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/1,4-Hexadien-Copolymere.

Die bei den erfindungsgemäßen Verfahren erhaltenen Metallocene der Formeln (II) und (IV), zeigen gegenüber den Dihalogen-Verbindungen zumindest gleichwertige, zum Teil jedoch höhere Aktivitäten in der Polymerisation von Olefinen, und die erhaltenen Polyolefine zeigen eine Verminderung der unerwünschten niedermolekularen extrahierbaren Anteile.

Die Polymerisation wird bei einer Temperatur von - 60 bis 300°C, bevorzugt 50 bis 200°C, ganz besonders bevorzugt 50 - 80°C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungform ist die Gasphasen- und Massepolymerisation.

Bevorzugt enthält der eingesetzte Katalysator eine der bei den erfindungsgemäßen Verfahren erhältlichen Metallocenverbindungen. Es können auch Mischungen zweier oder mehrerer Metallocenverbindungen eingesetzt werden, z. B. zur Herstellung von Polyolefinen mit breiter oder multimodaler Molmassenverteilung.

Der Cokatalysator, der zusammen mit einem bei den erfindungsgemäßen Verfahren erhältlichen Metallocene der Formeln (II) und (IV) das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (VII)

$$(R\ AlO)_n \qquad (VII)$$

verwendet.

Weitere geeignete Aluminoxane können z.B. cyclisch wie in Formel (VIII)

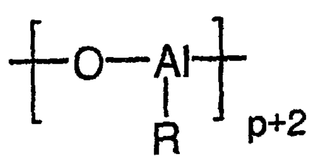

(VIII)

oder linear wie in Formel (IX)

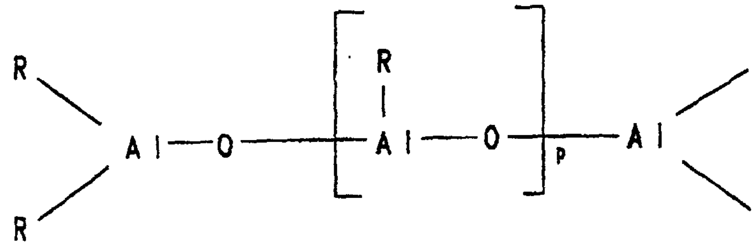

(IX)

oder vom Cluster-Typ wie in Formel (X)

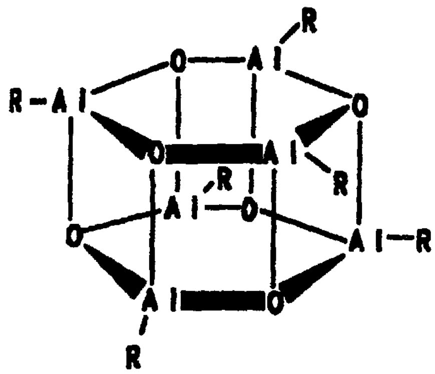

(X)

sein. Derartige Aluminoxane werden beispielsweise in JACS 117 (1995), 6465-74, Organometallics 13 (1994), 2957-2969, beschrieben.

Die Reste R in den Formeln (VII), (VIII), (IX) und (X) können gleich oder verschieden sein und eine $C_1$-$C_{20}$-Kohlenwasserstoffgruppe wie eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle ($AlR_3$ + $AlR'_3$) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyloder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,
Tris (4-fluorophenyl)boran, Tris(3,5-difluorophenyl)boran, Tris(4-fluoromethylphenyl)boran, Tris(pentafluorophenyl) boran, Tris(tolyl)boran, Tris(3,5-dimethylphenyl)boran, Tris(3,5-difluorophenyl)boran, $[(C_6F_5)_2BO]_2Al$-Me, $[(C_6F_5)_2BO]_3Al$ und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion

enthalten, wie beispielsweise Tetrakis(pentafluorophenyl)borate, Tetraphenylborate, $SbF_6^-$, $CF_3SO_3^-$ oder $ClO_4^-$. Als kationisches Gegenion werden protonierte Lewis-Basen wie z.B. Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen oder das Triphenylcarbenium eingesetzt.

Beispiele für solche ionische Verbindungen sind

Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentaf luorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri (methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.

Bevorzugt sind Triphenylcarbeniumtetrakis(pentafluorophenyl)borat und/oder N,N-Dimethylaniliniumtetrakis (pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.

7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri (butyl)ammonium)nonaborat,
Bis(tri(butyl)ammonium)undecaborat,
Bis(tri(butyl)ammonium)dodecaborat,
Bis(tri(hutyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(butyl)ammoniumbis(nonahydrid-1,3-dicarbonnonaborat)cobaltate(III),
Tri(butyl)ammoniumbis(undecahydrid-7,8-dicarbaundecaborat)ferrat(III)

von Bedeutung.

Als weitere Cokatalysatoren, die ungeträgert oder geträgert vorliegen können, sind die in EP-A-0924223, DE-A-19622207, EP-A-0601830, EP-A-0824112, EP-A-0824113, WO 99/06414, EP-A-0811627 und DE-A-19804970 genannten Verbindungen zu verwenden.

Die Trägerkomponente des Katalysatorsystems kann ein beliebiger organischer oder anorganischer, inerter

Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entspre-chende Oxid-Mischungen. Andere anorganische Oxide, die allein oder in Kombination mit den zuletzt genannten bevorzugten oxiden Trägern eingesetzt werden können, sind z.B. MgO, $ZrO_2$ , $TiO_2$ oder $B_2O_3$, um nur einige zu nennen.

Die verwendeten Trägermaterialien weisen eine spezifische Oberfläche im Bereich von 10 bis 1000 $m^2/g$, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 $m^2/g$, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 $m^2/g$, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösungsmittel mit dem Inertisierungsreagenz in reiner Form oder gelöst in einem geeigneten Lösungsmittel zur Reaktion bringt. Geeignete Lösungsmittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösungsmitteln wie sie bereits zuvor beschrieben worden sind gewaschen und anschließend im Inertgasstrom oder im Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösungsmittelresten oder anderen Verunreinigungen durch entsprechende Reinigungs- und Trocknungsoperationen befreit werden.

Das Katalysatorsystem wird hergestellt, indem mindestens ein Metallocen, mindestens ein Cokatalysator und mindestens ein inertisierter Träger gemischt werden.

Zur Darstellung des geträgerten Katalysatorsystems wird mindestens eine der oben beschriebenen bei den erfindungsgemäßen Verfahren erhältlichen Metallocen-Komponenten in einem geeigneten Lösungsmittel mit mindestens einer Cokatalysatorkomponente in Kontakt gebracht, wobei bevorzugt ein lösliches Reaktionsprodukt, ein Addukt oder ein Gemisch erhalten wird.

Die so erhaltene Zubereitung wird dann mit dem dehydratisierten oder inertisierten Trägermaterial vermischt, das Lösungsmittel entfernt und das resultierende geträgerte Metallocen-Katalysatorsystem getrocknet, um sicherzustellen, daß das Lösungsmittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:

a) Herstellung einer Metallocen/Cokatalysator-Mischung in einem geeigneten Lösungs- oder Suspensionsmittel, wobei die Metallocen-Komponente, erhältlich aus dem erfindungsgemäßen Verfahren, die zuvor beschriebenen Strukturen besitzt.

b) Aufbringen der Metallocen/Cokatalysatormischung auf einen porösen, bevorzugt anorganischen dehydratisierten Träger
c) Entfernen des Hauptanteils an Lösungsmittel von der resultierenden Mischung
d) Isolierung des geträgerten Katalysatorsystems
e) Gegebenenfalls eine Vorpolymerisation des erhaltenen gefcrägerten Katalysatorsystems mit einem oder mehreren olefinischen Monomer(en), um ein vorpolymerisiertes geträgertes Katalysatorsystem zu erhalten.

Bevorzugte Lösungsmittel für die Herstellung der Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponenten in dem gewählten Lösungsmittel löslich ist. Beispiele für geeignete Lösungsmittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösungsmittel aufgelöst. Es ist auch möglich, das Metallocen getrennt in einem geeigneten Lösungsmittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden.

Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösungsmittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.

Das Volumen der voraktivierten Lösung bzw. des Metallocen-Cokatalysator-gemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösungsmittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösungsmittels als auch der Anteil in den Poren des Trägermaterials entfernt. Das Entfernen des Lösungsmittels kann in konventioneller Art und Weise unter Anwendung von Vakuum und/oder Spülen mit Inertgas erfolgen. Beim Trocknungsvorgang kann die Mischung erwärmt werden, bis das freie Lösungsmittel entfernt worden ist, was üblicherweise 1 bis 3 Stunden bei einer vorzugsweise gewählten Temperatur zwischen 30 und 60 °C erfordert. Das freie Lösungsmittel ist der sichtbare Anteil an Lösungsmittel in der Mischung. Unter Restlösungsmittel versteht man den Anteil, der in den Poren eingeschlossen ist.
Alternativ zu einer vollständigen Entfernung des Lösungsmittels kann das geträgerte Katalysatorsystem auch nur bis zu einem gewissen Restlösungsmittelgehalt getrocknet werden, wobei das freie Lösungsmittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins, bevorzugt eines $\alpha$-Olefins (beispielsweise Styrol oder Phenyldimethylvinylsilan) als aktivitätssteigernde

Komponente, oder beispielsweise eines Antistatikums zugesetzt werden.

Als Antistatikum wird üblicherweise eine Mischung aus einem Metallsalz der Medialansäure, einem Metallsalz der Anthranilsäure und einem Polyamin eingesetzt. Derartige Antistatika werden beispielsweise in EP-A-0,636,636 beschrieben.

Das molare Verhältnis von Additiv zu Metallocenkomponente Verbindung (I) beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation eines oder mehrerer Olefine in Gegenwart des Katalysatorsystems, enthaltend mindestens eine erfindungsgemäße Übergangsmetallkomponente der Formel (II) oder (IV), die bei den erfindungsgemäßen Verfahren erhältlich ist. Unter dem Begriff Polymerisaton wird eine Homopolymerisation wie auch eine Copolymerisation verstanden.

Die bei den erfindungsgemäßen Verfahren erhaltenen Metallocene der Formeln (II) und (IV), zeigen gegenüber den Dihalogen-Verbindungen zumindest gleichwertige, zum Teil jedoch höhere Aktivitäten in der Polymerisation von Olefinen, und die erhaltenen Polyolefine zeigen eine Verminderung der unerwünschten niedermolekularen extrahierbaren Anteile.

Das dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan, eingesetzt werden. Die Alkylverbindung wird den Monomeren oder dem Suspensionsmittel zugesetzt und dient zur Reinigung der Monomere von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Bei der Polymerisation kann das Antistatikum zusammen mit oder getrennt von dem eingesetzten Katalysatorsystem in das Polymerisationssystem eindosiert werden.

Die mit dem Katalysatorsystem, das mindestens eines der bei den erfindungsgemäßen Verfahren erhaltenen Metallocene der Formeln (II) und (IV) enthält, dargestellten Polymere, zeigen eine gleichmäßige Kornmorphologie und weisen keine Feinkornanteile auf. Bei der Polymerisation mit dem Katalysatorsystem treten keine Beläge oder Verbackungen auf.

Mit dem Katalysatorsystem werden Polymere, wie Polypropylen mit außerordentlich hoher Stereo- und Regiospezifität erhalten.

Besonders charakteristisch für die Stereo- und Regiospezifität von Polymeren, insbesondere von Polypropylen, ist die.Triaden-Taktizität (TT) und der Anteil an 2-1-insertierten Propeneinheiten (RI), die sich aus den $^{13}$C-NMR-Spektren ermitteln lassen.

Die $^{13}$C-NMR- Spektren werden in einem Gemisch aus Hexachlorbutadien und Tetrachlorethan-$d_2$ bei erhöhter Temperatur (365 K) gemessen. Alle $^{13}$C-NMR-Spektren der gemessenen Polypropylen-Proben werden auf das Resonanzsignal von Tetrachlorethan-$d_2$ ($\delta$ = 73.81 ppm) geeicht.

Zur Bestimmung der Triaden-Taktizität des Polypropylens werden die Methyl-Resonanzsignale im $^{13}$C-NMR-Spektrum zwischen 23 und 16 ppm betrachtet; vgl. J. C. Randall, Polymer Sequence Determination: Carbon-13 NMR Method, Academic Press New York 1978; A. Zambelli, P. Locatelli, G. Bajo, F. A. Bovey, Macromolucules 8 (1975), 687-689; H. N. Cheng, J. A. Ewen, Makromol. Chem. 190 (1989), 1931-1943. Drei aufeinander folgende 1-2-insertierte Propeneinheiten, deren Methylgruppen in der "Fischer-Projektion" auf der gleichen Seite angeordnet sind, bezeichnet man als mm - Triade ($\delta$ = 21.0 ppm bis 22.0 ppm). Zeigt nur die zweite Methylgruppe der drei aufeinander folgenden Propeneinheiten zur anderen Seite, spricht man von einer rr-Triade ($\delta$ = 19.5 ppm bis 20.3 ppm) und zeigt nur die dritte Methylgruppe der drei aufeinander folgenden Propeneinheiten zur anderen Seite, von einer mr-Triade ($\delta$ = 20.3 ppm bis 21.0 ppm). Die Triaden-Taktizität berechnet man nach folgender Formel:

$$TT\,(\%) = mm / (mm + mr + rr) \cdot 100$$

Wird eine Propeneinheit invers in die wachsende Polymerkette insertiert, spricht man von einer 2-1-Insertion; vgl. T. Tsutsui, N. Ishimaru, A. Mizuno, A. Toyota, N. Kashiwa, Polymer 30, (1989), 1350-56. Folgende verschiedene strukturelle Anordnungen sind möglich:

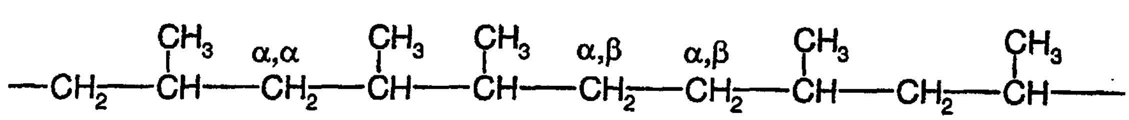

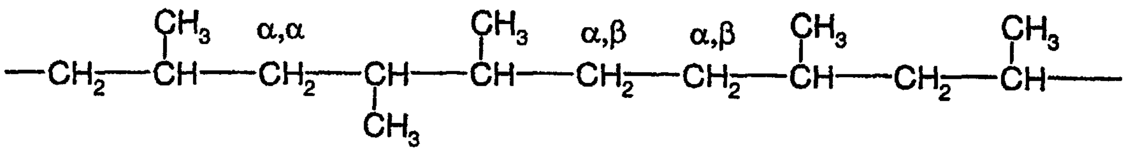

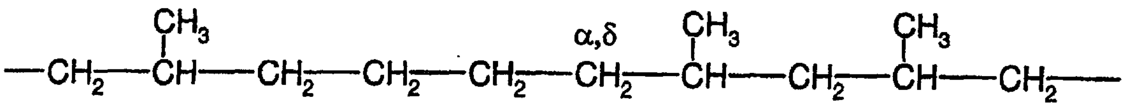

Der Anteil an 2-1-insertierten Propeneinheiten (RI) kann nach folgender Formel berechnet werden:

$$RI\ (\%) = 0.5\ I\alpha,\beta\ (I\alpha,\alpha + I\alpha,\beta + I\alpha,\delta) \cdot 100,$$

wobei

$I\alpha,\alpha$ die Summe der Intensitäten der Resonanzsignale bei $\delta$ = 41.84, 42.92 und 46.22 ppm,

$I\alpha,\beta$ die Summe der Intensitäten der Resonanzsignale bei $\delta$ = 30.13, 32.12, 35.11 und 35.57 ppm

sowie

$I\alpha,\delta$ die Intensität des Resonanzsignals bei $\delta$ = 37.08 ppm bedeuten.

Das isotaktische Polypropylen, das mit dem Katalysatorsystem hergestellt worden ist, zeichnet sich durch einen Anteil an 2-1-insertierten Propeneinheiten RI < 0.5% bei einer Triaden-Taktizität TT > 98.0% und einen Schmelzpunkt > 153°C aus, wobei $M_w/M_n$ des erfindungsgemäßen Polypropylens zwischen 2.5 und 3.5 liegt.

Die mit dem Katalysatorsystem herstellbaren Copolymere zeichnen sich durch eine gegenüber dem Stand der Technik deutlich höhere Molmasse aus. Gleichzeitig sind solche Copolymere durch Einsatz des Katalysatorsystems mit hoher Produktivität bei technisch relevanten Prozessparametern ohne Belagsbildung herstellbar.

Die nach dem Verfahren hergestellten Polymere sind insbesondere zur Herstellung reißfester, harter und steifer Formkörper wie Fasern, Filamente, Spritzgußteile, Folien, Platten oder Großhohlkörpern (z.B. Rohre) geeignet.

Die Erfindung wird durch folgende, die Erfindung jedoch nicht einschränkende Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösungsmittel wurden vor Gebrauch mit Argon gespült und über Molsieb absolutiert.

Beispiel 1: Darstellung von Zirkonium-monochloromono-(O-2,6-$Me_2C_6H_3$)

$(THF)_2$ (1)

Die Darstellung von (1) erfolgte analog der Vorschrift von H. Yasuda et al., J. Organomet. Chem. 493 (1994), Seiten 113. Aus 4.4 g (19 mmol) Zirkoniumtetrachlorid und 3.8 g (19.7 mmol) $Me_3SiO$-2,6- $Me_2C_5H_3$ wurden nach Reaktion und Kristallisation 5.3 g (61%) (1) erhalten.

Beispiel 2: Darstellung von Zirkonium-monochloromono-(0-2,4-(tert.-Bu)$_2C_6H_3$) $(THF)_2$ (2)

Die Darstellung von (2) erfolgte analog Beispiel 1. Aus 6.9 g (30 mmol) Zirkoniumtetrachlorid und 8.4 g (30 mmol) $Me_3SiO$-2,4-(tert.-Bu)$_2C_6H_3$ wurden nach Reaktion und Kristallisation 9.0 g (55%) (2) erhalten.

1H-NMR (400 MHz, $CDCl_3$) : 7.5 (1H), 7.3 (1H), 7.15 (dd, 1H), 4.5 (br., 8H), 2.1 (br., 8H), 1.5 (s, 9H), 1.3 (s, 9H).

Beispiel 3: pseudo-rac-Dimethylsilandiyl-bis(2-methyl-4,5-benzoindenyl)-zirkonium-monochloro-mono-(2,4-di-tert.-butyl-phenolat) (3)

Eine Lösung von 4 g (9.6 mmol) Dimethyl-bis-(2-methyl-4,5-benzoindenyl)-silan in 38 ml Toluol / 1.6 ml THF wurde mit 7.2 ml (19.2 mmol) einer 20%igen Lösung von n-Butyllithium in Toluol versetzt und 1 Stunde bei 60°C gerührt. 5.25 g (9.6 mmol) (2) wurden bei 20°C dazugegeben, und das Reaktionsgemisch wurde 1 Stunde bei 30°C gerührt. Das $^{1}$H-NMR einer Probe der Suspension zeigte ein pseudo-rac/pseudo-meso-Verhältnis von 4:1. Das Reaktionsgemisch wurde über Celite filtriert, der Filterkuchen mit insgesamt 125 ml heißem Toluol extrahiert, und das Filtrat wurde auf etwa 70 ml eingeengt. Nach Kristallisation bei -30°C wurde der gelbe kristalline Niederschlag durch Filtration isoliert, mit wenig kaltem Toluol gewaschen und im Vakuum getrocknet. Es wurden 3.2 g (44%) (3) erhalten.

1H-NMR (400 MHz, $CDCl_3$): 8.05 (dd,1H), 7.75 (m, 2H), 7.65 (dd, 1H), 7.60 (1H), 7.5 - 7.15 (m, 6H), 7.1 (m, 1H), 7.0 (m, 1H), 6.85 (s, 1H), 6.8 (d, 1H), 6.65 (m, 1H), 5.45 (d, 1H), 2.82 (s, 3H), 2. 45 (s, 3H), 1.45 (s, 3H), 1.35 (s, 3H), 1.25 (s, 9H), 0.95 (s, 9H).

Vergleichsbeispiel: rac-Dimethylsilandiyl-bis-(2-me thyl-4,5-benzo-indenyl)-zirkoniumdichlorid

Eine Lösung von 2.5 g (6.0 mmol) Dimethyl-bis-(2-methyl-4,5-benzo-indenyl)-silan in 18 ml Toluol / 2 ml THF wurde mit 4.5 ml (12.0 mmol) einer 20%igen Lösung von n-Butyllithium in Toluol versetzt und 2 Stunde bei 50°C gerührt. 2.26 g (6.0 mmol) $ZrCl_4$*$(THF)_2$ wurden bei 40°C dazugegeben, und das Reaktionsgemisch wurde 1/2 Stunde bei 40°C gerührt. Das $^{1}$H-NMR einer Probe der Suspension zeigte ein rac/meso-Verhältnis von 1:1. Das Reaktionsgemisch wurde filtriert, das gelbe Produkt mit insgesamt 30 ml Methylenchlorid und zwei mal mit je 5 ml THF extrahiert. Nach Trocknen im Vakuum wurden 0.7 g (20%) rac-Dimethylsilandiylbis-(2-methyl-4,5-benzo-indenyl)-zirkoniumdichlorid erhalten.

Löslichkeitsvergleich:

50 mg rac-Dimethylsilandiyl-bis-(2-methyl-4,5-benzo-indenyl)-zirkoniumdichlorid lösten sich bei Raumtemperatur vollständig in 240 ml Toluol (Löslichkeit ca. 0.36 mmol/l).

50 mg der Verbindung (3) lösten sich bei Raumtemperatur in < 5 ml Toluol sofort auf (Löslichkeit > 13 mmol/l).

Beispiel 3a: Katalysatordarstellung mit (3) und Polymerisation:

35,1 mg (0,047 mmol) (3) wurden in 2,1 ml 30%-iger MAO-Lösung in Toluol (Al/Zr=215) für 60 Minuten bei Raumtemperatur gerührt. Anschließend wurden 2 g $SiO_2$ (Grace XPO2107, vorbehandelt bei 140°C, 10 mbar, 10 Std.) dazugegeben und weitere 10 Minuten gerührt. Das Lösungsmittel wurde im Ölpumpenvakuum entfernt.

Ein trockener 21-Reaktor wurde zunächst mit Stickstoff und anschließend mit Propylen gespült und mit 1,5 1 flüssigem Propylen befüllt. Dazu wurden 2 ml TEA (20% ig in Varsol) gegeben und 15 Minuten gerührt. Anschließend wurde das oben hergestellte Katalysatorsystem (0,886 g) in 20 ml Heptan resuspendiert eingespritzt und mit 15 ml Heptan nachgespült. Das Reaktionsgemisch wurde auf die Polymerisationstemperatur von 60°C aufgeheizt und 1 Stunde polymerisiert. Gestoppt wurde die Polymerisation durch Abgasen des restlichen Propylens. Das Polymer wurde im Vakuumtrockenschrank getrocknet. Es resultierten 470 g Polypropylen-Pulver. Der Reaktor zeigte keine Beläge an der Innenwand oder Rührer. Die Katalysatoraktivität betrug 0,53 kg PP/g Katalysator x h.

Vergleichsbeispiel:

Katalysatordarstellung mit Dimethylsilandiyl-bis-(2-methyl-4,5-benzo-indenyl)-zirkoniumdichlorid und Polymerisation

27,1 mg (0,047 mmol) Dimethylsilandiyl-bis-(2-methyl-4,5-benzoindenyl)-zirkoniumdichlorid wurden in 2,1 ml 30%-iger MAO-Lösung in Toluol (Al/Zr=215) für 60 Minuten bei Raumtemperatur gerührt. Anschließend wurden 2 g $SiO_2$ (Grace XPO2107, vorbehandelt bei 140°C, 10 mbar, 10 Std.) dazugegeben und weitere 10 Minuten gerührt. Das Lösungsmittel wurde im Ölpumpenvakuum entfernt.

Ein trockener 21-Reaktor wurde zunächst mit Stickstoff und anschließend mit Propylen gespült und mit 1,5 1 flüssigem Propylen befüllt. Dazu wurden 2 ml TEA (20% ig in Varsol) zugegeben und 15 Minuten gerührt. Anschließend wurde das oben hergestellte Katalysatorsystem (0,897 g) in 20 ml Heptan resuspendiert eingespritzt und mit 15 ml Heptan nachgespült. Das Reaktionsgemisch wurde auf die Polymerisationstemperatur von 60°C aufgeheizt und 1 Stunde polymerisiert. Gestoppt wurde die Polymerisation durch Abgasen des restlichen Propylens. Das Polymer wurde im Vakuumtrockenschrank getrocknet. Es resultierten 410 g Polypropylen-Pulver. Der Reaktor zeigte keine Beläge an der Innenwand oder Rührer. Die Katalysatoraktivität betrug 0,46 kg PP/g Katalysator x h.

Beispiel 4: pseudo-rac-Dimethylsilandiyl-bis-(2-methyl-indenyl)-zirkonium-monochloro-mono-(2,4-di-tert.-butylphenolat) (4)

Eine Lösung von 2.5 g (7.9 mmol) Dimethyl-bis-(2-methyl-indenyl)-silan in 18 ml Toluol / 1ml THF wurde mit 5.9 ml (15.8 mmol) einer 20%igen Lösung von n-Butyllithium in Toluol versetzt und 1 Stunde bei 60°C gerührt. 4.32 g (7.9 mmol) (2) wurden bei 20°C dazugegeben, und das Reaktionsgemisch wurde 1 Stunde bei 30°C gerührt. Das $^1$H-NMR einer Probe der Suspension zeigte ein pseudorac/pseudo-meso-Verhältnis von 2:1. Das Reaktionsgemisch wurde über Celite filtriert, der Filterkuchen mit insgesamt 75 ml heißem Toluol extrahiert, das Filtrat eingeengt und nach Kristallisation bei -30°C ein gelber kristalliner Niederschlag durch Filtration isoliert, der mit wenig kaltem Toluol gewaschen und im Vakuum getrocknet wurde. Es wurden 2.0 g (39%) (4) erhalten.

1H-NMR (400 MHz, $CDCl_3$) : 8.03 (dd,1H), 7.6 (dd, 1H), 7.25 - 7.2 (m, 2H), 7.15 (m, 1H), 7.1-7.0 (m, 2H), 6.9 (m, 1H), 6.8 (s, 1H), 6.75 (m, 1H), 6.7 (m, 1H), 6.3 (s, 1H), 5.55 (d, 1H), 2.65 (s, 3H), 2. 3 (s, 3H), 1.3 (s, 3H), 1.25 (s, 9H), 1.22 (s, 3H), 1.15 (s, 9H).

Vergleichsbeispiel: rac-Dimethylsilandiyl-bis-(2-methyl-inde nyl)-zirkoniumdichlorid

Eine Lösung von 2.5 g (7.9 mmol) Dimethyl-bis-(2-methyl-indenyl)-silan in 18 ml Toluol / lml THF wurde mit 5.9 ml (15.8 mmol) einer 20%igen Lösung von n-Butyllithium in Toluol versetzt und 1 Stunde bei 60°C gerührt. 3.0 g (7.9 mmol) $ZrCl_4$*$(THF)_2$ wurden bei 20°C dazugegeben, und das Reaktionsgemisch wurde 1 Stunde bei 30°C gerührt. Das $^1$H-NMR einer Probe der Suspension zeigte ein rac/meso-Verhältnis von 1:1. Nach Extraktion mit heißem Toluol und Kristallisation wurden 0.7 g (19%) Dimethylsilandiyl-bis-(2-methyl-indenyl)-zirkoniumdichlorid erhalten.

Löslichkeitsvergleich:

50 mg Dimethylsilandiyl-bis-(2-methyl-indenyl)-zirkoniumdichlorid lösten sich bei Raumtemperatur vollständig in 50 ml Toluol (Löslichkeit ca. 2.1 mmol/l).

50 mg der Verbindung (4) lösten sich bei Raumtemperatur in < 5 ml Toluol sofort auf (Löslichkeit > 15 mmol/l).

Beispiel 5: pseudo-rac-Dimethylsilandiyl-bis-(2-methyl-4, 5-benzoindenyl)-zirkonium-monochloro-mono-(2,6-di-methylphenolat) (5)

Eine Lösung von 1 g (2.4 mmol) Dimethyl-bis-(2-methyl-4,5-benzoindenyl)-silan in 7 ml Toluol / 0.4 ml THF wurde mit 1.8 ml (2.8 mmol) einer 20%igen Lösung von n-Butyllithium in Toluol versetzt und 1 Stunde bei 60°C gerührt. 1.11 g (2.4 mmol) (1) wurden bei 20°C dazugegeben, und das Reaktionsgemisch wurde 1 Stunde bei 30°C gerührt. Das $^1$H-NMR einer Probe der Suspension zeigte ein pseudorac/pseudo-meso-Verhältnis größer 5:1. Das Reaktionsgemisch wurde über Celite filtriert, der Filterkuchen mit insgesamt 55 ml heiβem Toluol extrahiert, das Filtrat eingeengt und nach Kristallisation bei -30°C ein gelber kristalliner Niederschlag durch Filtration isoliert, der mit wenig kaltem Toluol gewaschen und im Vakuum getrocknet wurde. Es wurden 0.7 g (44%) (5) erhalten.

Beispiel 6: pseudo-rac-Dimethylsilandiyl-bis-(2-methyl-indenyl)-zirkonium-monochloro-mono-(2,6-di-methyl-phenolat) (6)

Eine Lösung von 1 g (3.16 mmol) Dimethyl-bis-(2-methyl-indenyl)-silan in 7 ml Toluol / 0.4ml THF wurde mit 2.4 ml (6.4 mmol) einer 20%igen Lösung von n-Butyllithium in Toluol versetzt und 1 Stunde bei 60°C gerührt. 1.46 g (3.15 mmol) (1) wurden bei 20°C dazugegeben, und das Reaktionsgemisch wurde 1 Stunde bei 30°C gerührt. Das $^1$H-NMR einer Probe der Suspension zeigte ein pseudorac/pseudo-meso-Verhältnis von ca. 8 :1. Das Reaktionsgemisch wurde über Celite filtriert, der Filterkuchen mit insgesamt 60 ml heißem Toluol extrahiert, das Filtrat eingeengt und nach Kristallisation bei -30°C ein gelber kristalliner Niederschlag durch Filtration isoliert, der mit wenig kaltem Toluol gewaschen und im Vakuum getrocknet wurde. Es wurden 0.95 g (53%) (6) erhalten.

1H-NMR (400 MHz, $CDCl_3$): 7.98 (m, 1H), 7.61 (m, 1H), 7.35 - 7.23 (m, 2H), 7.1-6.99 (m, 3H), 6.76 (very broad s, 2H), 6.69 (s. 1H), 6.6 - 6.53 (m, 2H), 6.23 (s, 1H), 2.64 (s, 3H), 2.27 (s, 3H), 2.16 (br. S, 3H), 1.7 (br. s, 3H), 1.33 (s, 3H), 1.22 (s, 3H).

Beispiel 7: pseudo-rac-Dimethylsilandiyl-bis-(2-methyl-4-phenylindenyl)-zirkonium-monochloro-mono-(2,6-di-methylphenolat) (7)

Eine Lösung von 1 g (2.13 mmol) Dimethyl-bis-(2-methyl-4-phenylindenyl)-silan in 7 ml Toluol / 0.4 ml THF wurde mit 1.6 ml (4.3 mmol) einer 20%igen Lösung von n-Butyllithium in Toluol versetzt und 1 Stunde bei 60°C gerührt.

1.0 g (2.16 mmol) (1) wurden bei 20°C dazugegeben, und das Reaktionsgemisch wurde 1 Stunde bei 30°C gerührt. Das $^1$H-NMR einer Probe der Suspension zeigte ein pseudorac/pseudo-meso-Verhältnis von ca. 4 :1. Das Reaktionsgemisch wurde über Celite filtriert, der Filterkuchen mit insgesamt 80 ml heißem Toluol extrahiert, das Filtrat eingeengt und nach Kristallisation bei -30°C ein gelber kristalliner Niederschlag durch Filtration isoliert, der mit wenig kaltem Toluol gewaschen und im Vakuum getrocknet wurde. Es wurden 0.7 g (46%) (7) erhalten.

1H-NMR (400 MHz, $CDCl_3$): 8.05 (d, 1H), 7.63 (d, 1H), 7.6 - 6.65 (m, 18H), 6.39 (s, 1H), 2.69 (s, 3H), 2.39 (s, 3H), 1.75 (s, 3H), 1.50 (s, 3H), 1.41 (s, 3H), 1.30 (s, 3H).

Vergleichsbeispiel: rac-Dimethylsilandiyl-bis- (2-methyl-4-phe nyl-indenyl)-zirkoniumdichlorid

Eine Lösung von 2 g (4.26 mmol) Dimethyl-bis-(2-methyl-4-phenylindenyl)-silan in 14 ml THF wurde mit 3.2 ml (8.6 mmol) einer 20%igen Lösung von n-Butyllithium in Toluol versetzt und 2 Stunde bei 50°C gerührt. 1.6 g (4.6 mmol) $ZrCl_4$*$(THF)_2$ wurden bei 20°C dazugegeben, und das Reaktionsgemisch wurde 2 Stunde bei 40°C gerührt. Das $^1$H-NMR einer Probe der Suspension zeigte ein rac/ meso-Verhältnis von ca. 2 :1. Das Lösungsmittel wurde weitestgehend entfernt, der Rückstand in Toluol suspendiert und über Celite filtriert, und der Filterkuchen wurde mit heißem Toluol extrahiert. Das Filtrat wurde eingeengt, und nach Kristallisation bei -30°C wurde ein gelber pulvriger Niederschlag durch Filtration isoliert, der mit wenig kaltem Toluol gewaschen und im Vakuum getrocknet wurde. Es wurden 0.35 g (13%) rac-Dimethylsilandiylbis-(2-methyl-4-phenyl-indenyl)-zirkoniumdichlorid erhalten.

Beispiel 8: pseudo-rac-Dimethylsilandiyl-bis-(2-methyl-4-(4'-tert.-butyl-phenyl)-indenyl)-zirkonium-monochloro-mono-(2,6-di-methyl-phenolat) (8)

Eine Lösung von 4 g (6.89 mmol) Dimethyl-bis-(2-methyl-4-(4'-tert.-butyl-phenyl)-indenyl)-silan in 28 ml Toluol /1.6 ml THF wurde mit 5.14 ml (13.8 mmol) einer 20%igen Lösung von n-Butyllithium in Toluol versetzt und 1 Stunde bei 80°C gerührt. 3.18 g (6.9 mmol) (1) wurden bei 20°C dazu gegeben, und das Reaktionsgemisch wurde 1 Stunde bei 30°C gerührt. Nach Zugabe von 25 ml Toluol wurde das Reaktionsgemisch auf 80°C erhitzt und über Celite filtriert. Der Filterkuchen wurde mit insgesamt 150 ml heißem Toluol extrahiert, das Filtrat auf ca. 20 ml eingeengt, und nach Kristallisation bei 5°C wurde ein gelber kristalliner Niederschlag durch Filtration isoliert, der mit wenig kaltem Toluol gewaschen und im Vakuum getrocknet wurde. Es wurden 2.66 g (47%) (8) erhalten.

1H-NMR (400 MHz, $CDCl_3$): 7.98 (d, 1H), 7.78 (d, 1H), 7.51 - 6.6 (m, 11H), 6.36 (s, 1H), 2.62 (s, 3H), 2.35 (s, 3H), 1.68 (s, 3H), 1.40 (s, 3H), 1.38 (s, 3H), 1.30 (s, 9H), 1.25 (s, 3H), 1.16 (s, 9H).

**Patentansprüche**

1. Verfahren zur Herstellung von Monoaryloxy-Metallocenen der Formel (II), **dadurch gekennzeichnet, daß** eine Ligandausgangsverbindung der Formel (III) mit einer ÜbergangsmetallVerbindung der Formel (I) umgesetzt wird,

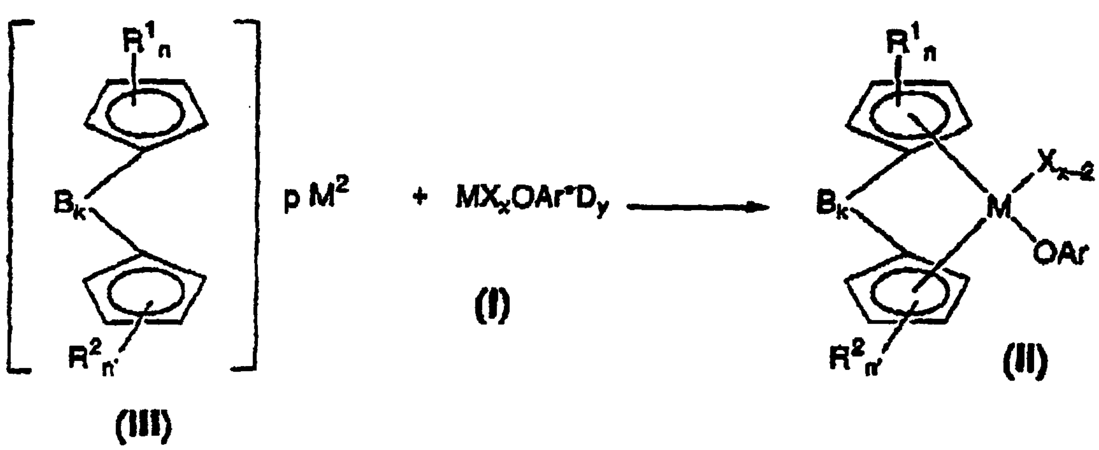

(III) (I) (II)

wobei

M ein Metall der III., IV., V. oder VI. Nebengruppe des Periodensystems der Elemente ist,

X ein Halogenatom ist,

Ar eine $C_6$-$C_{40}$-kohlenstoffhaltige aromatische Gruppe ist, $C_5$-$C_{24}$-Heteroaryl, $C_7$-$C_{30}$-Alkylaryl, fluorhaltiges $C_6$-$C_{24}$-Aryl oder fluorhaltiges $C_7$-$C_{30}$-Alkylaryl , vorzugsweise eine mit $C_1$-$C_6$-Alkyl und/oder $C_6$-$C_{10}$-Aryl-Resten substituierte $C_6$-$C_{14}$-Arylgruppe,

D ein neutraler lewisbasischer Ligand ist, bevorzugt ein linearer, cyclischer oder verzweigter Sauerstoff-, Schwefel-, Stickstoff- oder Phosphor-haltiger Kohlenwasserstoff,

$M^2$ Li, Na, K, MgCl, MgBr, Mg oder Ca ist,

$R^1$ gleich oder verschieden sind und Si $(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl,
oder $R^1$ eine $C_1$-$C_{30}$ - kohlenstoffhaltige Gruppe, bevorzugt $C_1$-$C_{25}$-Alkyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,
oder zwei oder mehrere Reste $R^1$ so miteinander verbunden sind, daß die Reste $R^1$ und die sie verbindenden Atome des Cyclopentadienylringes ein $C_4$-$C_{24}$-Ringsystem bilden, welches gegebenenfalls substituiert ist,

$R^2$ gleich oder verschieden sind und $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl,
oder $R^2$ eine $C_1$-$C_{30}$ - kohlenstoffhaltige Gruppe, bevorzugt $C_1$-$C_{25}$-Alkyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,
oder zwei oder mehrere Reste $R^2$ so miteinander verbunden sind, daß die Reste $R^2$ und die sie verbindenden Atome des Cyclopentadienylringes ein $C_4$-$C_{24}$-Ringsystem bilden, welches gegebenenfalls substituiert ist

x gleich der Oxidationzahl von M minus 1 ist,

n gleich 1 bis 5 für k = 0, und n gleich 0 bis 4 für k = 1 ist,

n' gleich 1 bis 5 für k = 0, und n' gleich 0 bis 4 für k = 1 ist,

k gleich Null oder 1 ist und

p gleich 1 für zweifach positiv geladene Metallionen oder 2 für einfach positiv geladene Metallionen oder Metallionenfragmente ist,

y eine Zahl zwischen 0 und 2 ist,

B ein verbrückendes Strukturelement zwischen den beiden Cyclopentadienylringen bezeichnet.

**2.** Verfahren nach Anspruch 1, **dadurch gekennzeichnet, daß** ein Ansa-Monoaryloxy-Bisindenyl-Metallocenen der Formel (IV) hergestellt wird durch Umsetzung einer Ligandausgangsverbindung (V) mit einer Übergangsmetallverbindung der Formel, (Ia),

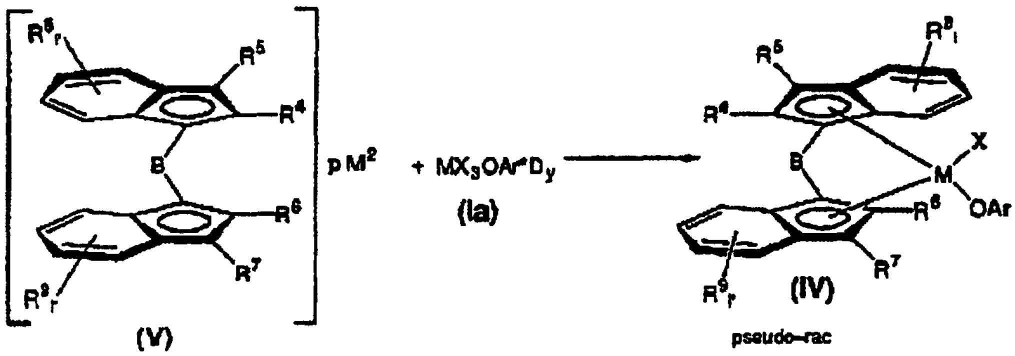


worin

| | |
|---|---|
| M | gleich Ti, Zr oder Hf ist, |
| X | ein Halogenatom ist, |
| Ar | eine $C_6$-$C_{40}$-kohlenstoffhaltige aromatische Gruppe ist, $C_5$-$C_{24}$-Heteroaryl, $C_7$-$C_{30}$-Alkylaryl, fluorhaltiges $C_6$-$C_{24}$-Aryl, oder fluorhaltiges $C_{7-}C_{30}$-Alkylaryl, vorzugsweise eine mit $C_1$-$C_6$-Alkyl und/oder $C_6$-$C_{10}$-Aryl-Resten substituierte $C_6$-$C_{14}$-Arylgruppe, |
| D | ein neutraler lewisbasischer Ligand ist, bevorzugt ein linearer, cyclischer oder verzweigter Sauerstoff-, Schwefel-, Stickstoff- oder Phosphor-haltiger Kohlenwasserstoff, besonders bevorzugt ein Ether, Polyether, Amin oder Polyamin, |
| $M^2$ | Li, Na, K, MgCl, MgBr, Mg oder Ca ist, |
| $R^4$, $R^6$ | gleich oder verschieden sind und ein Wasserstoffatom oder eine $C_1$-$C_{20}$ - kohlenstoffhaltige Gruppe, bevorzugt $C_1$-$C_{18}$-Alkyl,, $C_2$-$C_{10}$-Alkenyl, $C_3$-$C_{15}$-Alkylalkenyl, $C_6$-$C_{18}$-Aryl, $C_5$-$C_{18}$-Heteroaryl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl ist, |
| $R^5$, $R^7$ | gleich oder verschieden sind und ein Wasserstoffatom oder eine $C_1$-$C_{20}$ - kohlenstoffhaltige Gruppe, bevorzugt $C_1$-$C_{18}$-Alkyl, $C_2$-$C_{10}$-Alkenyl, $C_3$-$C_{15}$-Alkylalkenyl, $C_6$-$C_{18}$-Aryl, $C_5$-$C_{18}$-Heteroaryl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl sind, |
| $R^8$ und $R^9$ | gleich oder verschieden sind und ein Wasserstoffatom, Halogenatom oder eine $C_1$-$C_{20}$ - kohlenstoffhaltige Gruppe bedeuteten, bevorzugt eine lineare oder verzweigte $C_1$-$C_{18}$-Alkylgruppe, $C_2$-$C_{10}$-Alkenyl, $C_3$-$C_{15}$-Alkylalkenyl, eine $C_6$-$C_{18}$-Arylgruppe, die gegebenenfalls substituiert ist, insbesondere Phenyl, Tolyl, Xylyl, tert.-Butylphenyl, Ethylphenyl, Naphthyl, Acenaphthyl, Phenanthrenyl oder Anthracenyl, $C_5$-$C_{18}$-Heteroaryl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_{7-}C_{20}$-Alkylaryl sind oder zwei Reste $R^6$ oder $R^9$ ein mono- oder polycyclisches Ringssystem bilden, das seinerseits gegebenenfalls substituiert ist, |
| l, l' | gleich oder verschieden eine ganze Zahl zwischen Null und 4, bevorzugt 1 oder 2, besonders bevorzugt gleich 1 sind, |
| p | gleich 1 für zweifach positiv geladene Metallionen oder 2 für einfach positiv geladene Metallionen oder Metallionenfragmente, |
| y | eine Zahl zwischen 0 und 2 ist und |
| B | ein verbrückendes Strukturelement zwischen den beiden Indenylresten bezeichnet. |

3. Verfahren nach mindestens einem der vorhergehenden Ansprüche, **dadurch gekennzeichnet, daß** M Zirkonium ist.

4. Verfahren nach mindestens einem der vorhergehenden Ansprüche, **dadurch gekennzeichnet, daß** eine Übergangsmetallverbindung (Ia) der folgenden Formel eingesetzt wird

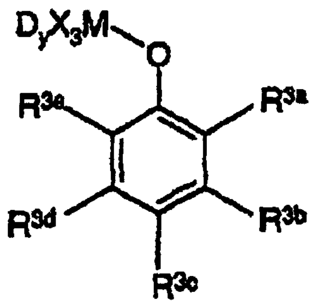

(Ia)

wobei

M Ti, Zr oder Hf ist,

X ein Halogenatom ist,

D ein neutraler lewisbasischer Ligand, ist, bevorzugt ein linearer, cyclischer oder verzweigter Sauerstoff-, Schwefel-, Stickstoff- oder Phosphor-baltiger Kohlenwasserstoff, besonders bevorzugt ein Ether, Polyether, Amin oder Polyamin,

$R^{3a}$ Halogen oder $Si(R^{12})_3$ ist, worin $R^{12}$ gleich oder verschieden ein Wässerstoffatom oder eine $C_1$-$C_{14}$-kohlenstoffhaltige Gruppe, bevorzugt $C_1$-$C_4$-Alkyl, $C_1$-$C_4$-Alkoxy, $C_6$-$C_{10}$-Aryl, $C_6$-$C_{10}$-Fluoraryl, $C_6$-$C_{10}$-Aryloxy, $C_2$-$C_{10}$-Alkenyl, $C_7$-$C_{14}$-Arylalkyl oder $C_7$-$C_{14}$-Alkylaryl,
oder $R^{3a}$ eine $C_1$-$C_{30}$ - kohlenstoffhaltige Gruppe, bevorzugt $C_1$-$C_{25}$-Alkyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_1$-$C_{10}$-Alkyloxy, $C_6$-$C_{10}$-Aryloxy, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,

$R^{3b}$ bis $R^{3e}$ gleich oder verschieden Wasserstoff, Halogen oder eine $C_1$-$C_{30}$ - kohlenstoffhaltige Gruppe, bevorzugt $C_1$-$C_{25}$-Alkyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_1$-$C_{10}$-Alkyloxy, $C_6$-$C_{10}$-Aryloxy, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl sind, oder zwei oder mehrere Reste $R^{3a}$ bis $R^{3e}$ so miteinander verbunden sein können, daß die Reste $R^3$ und die sie verbindenden Atome des Benzolringes ein $C_4$ bis $C_{24}$-Ringsystem bilden, welches seinerseits gegebenenfalls substituiert ist, und

y eine Zahl zwischen 0 und 2 ist.

5. Verfahren nach Anspruch 4, **dadurch gekennzeichnet, daß**

M Zirkonium ist,

X Chlor ist,

D ein neutraler Sauerstoff- oder Stickstoffhaltiger lewisbasischer Ligand ist, bevorzugt ein Ether, Polyether, Amin oder Polyamin,

$R^{3a}$ Halogen oder eine $C_1$-$C_{10}$ - kohlenstoffhaltige Gruppe, bevorzugt $C_1$-$C_8$-Alkyl, $C_2$-$C_8$-Alkenyl,

$C_3$-$C_8$-Alkylalkenyl, $C_6$-$C_{10}$-Aryl, $C_5$-$C_9$-Heteroaryl, $C_1$-$C_4$-Alkyloxy, $C_6$-Aryloxy. $C_7$-$C_{10}$-Arylalkyl, $C_7$-$C_{10}$-Alkylaryl, ist

$R^{3b}$ bis $R^{3e}$ gleich oder verschieden Wasserstoff, Halogen oder eine $C_1$-$C_{10}$ - kohlenstoffhaltige Gruppe, bevorzugt $C_1$-$C_8$-Alkyl, $C_2$-$C_8$-Alkenyl, $C_3$-$C_8$-Alkylalkenyl, $C_6$-$C_{10}$-Aryl, $C_5$-$C_9$-Heteroaryl, $C_1$-$C_4$-Alkyloxyl, $C_6$-Aryloxy, $C_7$-$C_{10}$-Arylalkyl, $C_7$-$C_{10}$-Alkylaryl, ist oder zwei oder mehrere Reste $R^{3a}$ bis $R^{3e}$ so miteinander verbunden sind, daß die Reste $R^3$ und die sie verbindenden Atome des Benzolringes ein $C_4$ bis $C_8$-Ringsystem bilden, welches seinerseits gegebenenfalls substituiert ist, und

y eine Zahl zwischen 0 und 2 ist.

**6.** Verfahren nach Anspruch 4 oder 5, **dadurch gekennzeichnet, daß**

M Zirkonium ist,

X Chlor ist,

D Tetrahydrofuran, 1,2-Dimethoxyethan oder N,N,N',N'-Tetramethylethylendiamin ist,

$R^{3a}$ Chlor, Brom oder eine $C_1$-$C_{10}$ - kohlenstoffhaltige Gruppe, bevorzugt $C_1$-$C_6$-Alkyl, $C_2$-$C_4$-Alkenyl, $C_6$-$C_{10}$-Aryl, ist

$R^{3b}$ bis $R^{3d}$ gleich oder verschieden Wasserstoff, Chlor, Brom oder eine $C_1$-$C_{10}$ - Kohlenstoffhaltige Gruppe bevorzugt $C_1$-$C_6$-Alkyl, $C_2$-$C_4$-Alkenyl, $C_6$-$C_{10}$-Aryl, ist oder zwei oder mehrere Reste $R^{3a}$ bis $R^{3e}$ so miteinander verbunden, sind, daß die Reste $R^3$ und die sie verbindenden Atome des Benzolringes ein $C_4$ bis $C_6$-Ringsystem bilden, welches seinerseits gegebenenfalls substituiert ist, und

y eine Zahl zwischen 0 und 2 ist.

**7.** Verfahren nach einem der Ansprüche 4 bis 6, **dadurch gekennzeichnet, daß** im Metallocen-Rohprodukt das verhältnis von Pseudo-Rac/Pseudo-Meso größer als 1 ist.

**8.** Verfahren nach einem der Ansprüche 4 bis 7, **dadurch gekennzeichnet, daß** das Verhältnis von Pseudo-Rac/Pseudo-Meso größer als 4 ist.

**9.** Metallocen der Formel (II) erhältlich nach einem verfahren gemäß der vorhergehenden Ansprüche 1 bis 8, wobei M nicht Titan bedeutet.

**10.** Metallocen der Formel (IV) erhältlich nach einem Verfahren gemäß Ansprüche 2 bis 8.

**11.** Metallocen gemäß Anspruch 10, **dadurch gekennzeichnet, daß** das Zirkoniumfragment die Bedeutung -zirkonium-monochloromono-(2,6-di-methyl-phenolat), -zirkonium-monochloromono- (2,4-di-tert.-butyl-phenolat), -zirkonium-monochloromono- (2-methyl-phenolat), -zirkonium-monochloro-mono-(2-isopropyl-phenolat), -zirkonium-monochloro-mono-(2,4-dimethylphenolat), -zirkonium-monochloro-mono-(2,3-dimethyl-phenolat), -zirkonium-monochloro-mono-(2,4,6-trimethyl-phenolat), -zirkonium-monochloro-mono-(2-iso-propyl-5-methyl-phenolat). -zirkonium-monochloro-mono-(2-tert.-butyl-6-methyl-phenolat), -zirkonium-monochloro-mono-(2,6-di-iso-propyl-phenolat), -zirkonium-monochloro-mono-(1-naphtholat) oder -zirkonium-monochloro-mono-(2-phenyl-phenolat) hat.

**12.** Metallocen gemäß Anspruch 9, **dadurch gekennzeichnet, daß** es zur Polymerisation eines oder mehrerer Olefine der Formel $R^{\alpha}$-C=CH-$R^{\beta}$ verwendet wird, worin $R^{\alpha}$ und $R^{\beta}$ gleich oder verschieden sind und ein Wasserstoffatom oder einen Kohlenwasserstoff mit 1 bis 20 C-Atomen bedeuten oder $R^{\alpha}$ und $R^{\beta}$ zusammen mit den sie verbindenden Atomen einen oder mehrere Ringe bilden.

**13.** Verwendung einer Übergangsmetallverbindung der Formel (Ia), zur stereoselektiven Herstellung von Monoaryloxy-Metallocenen der Formel (II).

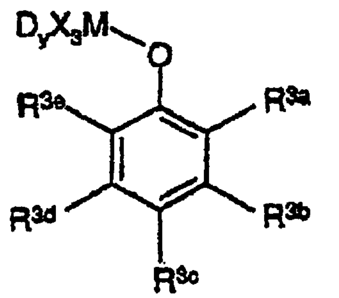

(Ia)

wobei die Symbole D, X, M und $R^{3a-3e}$ die vorstehend genannte Bedeutung haben.

## Claims

1. A process for preparing monoaryloxy-metallocenes of the formula (II), which comprises reacting a ligand starting compound of the formula (III) with a transition metal compound of the formula (I),

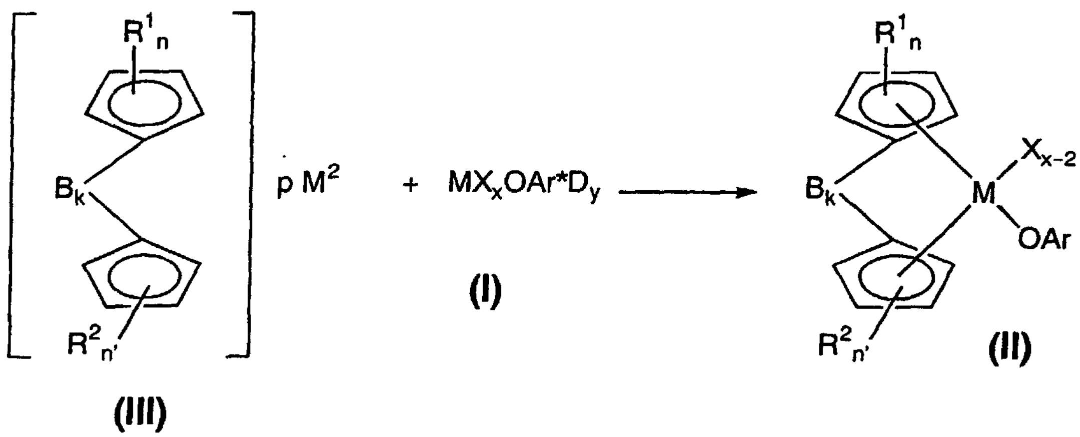

where

M is a metal of transition group III, IV, V or VI of the Periodic Table of the Elements,

X is a halogen atom,

Ar is a $C_6$-$C_{40}$ aromatic group, $C_5$-$C_{24}$-heteroaryl, $C_7$-$C_{30}$-alkylaryl, fluorinated $C_6$-$C_{24}$-aryl or fluorinated $C_7$-$C_{30}$-alkylaryl, preferably a $C_6$-$C_{14}$-aryl group substituted by $C_1$-$C_6$-alkyl and/or $C_6$-$C_{10}$-aryl radicals,

D is an uncharged Lewis base ligand, preferably a linear, cyclic or branched oxygen-, sulfur-, nitrogen- or phosphorus-containing hydrocarbon,

$M^2$ is Li, Na, K, MgCl, MgBr, Mg or Ca,

$R^1$ are identical or different and are each $Si(R^{12})_3$, where $R^{12}$ are identical or different and are each a hydrogen atom or a $C_1$-$C_{40}$ group, preferably $C_1$-$C_{20}$-alkyl, $C_1$-$C_{10}$-fluoroalkyl, $C_1$-$C_{10}$-alkoxy, $C_6$-$C_{20}$-aryl, $C_6$-$C_{10}$-fluoroaryl, $C_6$-$C_{10}$-aryloxy, $C_2$-$C_{10}$-alkenyl, $C_7$-$C_{40}$-arylalkyl, $C_7$-$C_{40}$-alkylaryl or $C_8$-$C_{40}$-arylalkenyl, or $R^1$ is a $C_1$-$C_{30}$ group, preferably $C_1$-$C_{25}$-alkyl, $C_2$-$C_{25}$-alkenyl, $C_3$-$C_{15}$-alkylalkenyl, $C_6$-$C_{24}$-aryl, $C_5$-$C_{24}$-

heteroaryl, $C_7$-$C_{30}$-arylalkyl, $C_7$-$C_{30}$-alkylaryl, fluorinated $C_1$-$C_{25}$-alkyl, fluorinated $C_6$-$C_{24}$-aryl, fluorinated $C_7$-$C_{30}$-arylalkyl or fluorinated $C_7$-$C_{30}$-alkylaryl,
or two or more radicals $R^1$ are joined to one another so that the radicals $R^1$ and the atoms of the cyclopentadienyl ring which connect them form a $C_4$-$C_{24}$ ring system which may be substituted,

$R^2$ are identical or different and are each $Si(R^{12})_3$, where $R^{12}$ are identical or different and are each a hydrogen atom or a $C_1$-$C_{40}$ group, preferably $C_1$-$C_{20}$-alkyl, $C_1$-$C_{10}$-fluoroalkyl, $C_1$-$C_{10}$-alkoxy, $C_6$-$C_{14}$-aryl, $C_6$-$C_{10}$-fluoroaryl, $C_6$-$C_{10}$-aryloxy, $C_2$-$C_{10}$-alkenyl, $C_7$-$C_{40}$-arylalkyl, $C_7$-$C_{40}$-alkylaryl or $C_8$-$C_{40}$-arylalkenyl,
or $R^2$ is a $C_1$-$C_{30}$ group, preferably $C_1$-$C_{25}$-alkyl, $C_2$-$C_{25}$-alkenyl, $C_3$-$C_{15}$-alkylalkenyl, $C_6$-$C_{24}$-aryl, $C_5$-$C_{24}$-heteroaryl, $C_7$-$C_{30}$-arylalkyl, $C_7$-$C_{30}$-alkylaryl, fluorinated $C_1$-$C_{25}$-alkyl, fluorinated $C_6$-$C_{24}$-aryl, fluorinated $C_7$-$C_{30}$-arylalkyl or fluorinated $C_7$-$C_{30}$-alkylaryl,
or two or more radicals $R^2$ are joined to one another so that the radicals $R^2$ and the atoms of the cyclopentadienyl ring which connect them form a $C_4$-$C_{24}$ ring system which may be substituted,

x is equal to the oxidation number of M minus 1,

n is from 1 to 5 when k = 0, and n is from 0 to 4 when k = 1,

n' is from 1 to 5 when k = 0, and n' is from 0 to 4 when k = 1,

k is zero or 1 and

p is 1 for doubly positively charged metal ions or 2 for singly positively charged metal ions or metal ion fragments,

y is from 0 to 2,

B is a bridging structural element between the two cyclopentadienyl rings.

**2.** A process as claimed in claim 1 in which ans ansa-monoaryloxy-bisindenyl-metallocene of the formula (IV) is prepared by reacting a ligand starting compound (V) with a transition metal compound of the formula (Ia),

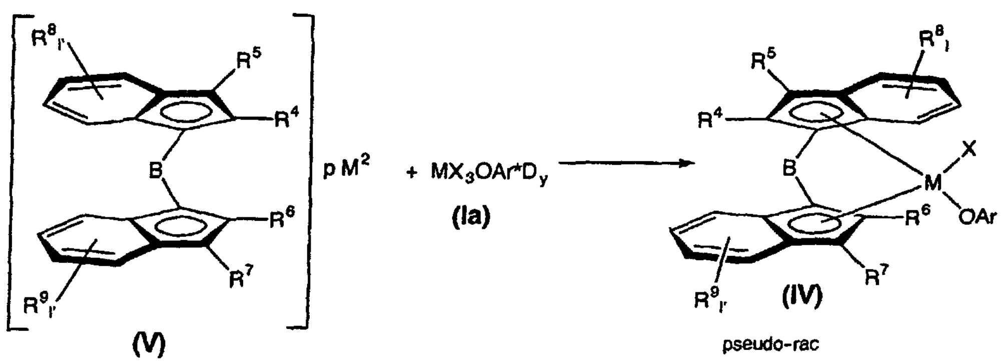


where

M is Ti, Zr or Hf,

X is a halogen atom,

Ar is a $C_6$-$C_{40}$ aromatic group, $C_5$-$C_{24}$-heteroaryl, $C_7$-$C_{30}$-alkylaryl, fluorinated $C_6$-$C_{24}$-aryl or fluorinated $C_7$-$C_{30}$-alkylaryl, preferably a $C_6$-$C_{14}$-aryl group substituted by $C_1$-$C_6$-alkyl and/or $C_6$-$C_{10}$-aryl radicals,

D is an uncharged Lewis base ligand, preferably a linear, cyclic or branched oxygen-, sulfur-, nitrogen- or phosphorus-containing hydrocarbon, particularly preferably an ether, polyether, amine or

polyamine,

M2 is Li, Na, K, MgCl, MgBr, Mg or Ca,

$R^4$, $R^6$ are identical or different and are each a hydrogen atom or a $C_1$-$C_{20}$ group, preferably $C_1$-$C_{18}$-alkyl, $C_2$-$C_{10}$-alkenyl, $C_3$-$C_{15}$-alkylalkenyl, $C_6$-$C_{18}$-aryl, $C_5$-$C_{18}$-heteroaryl, $C_7$-$C_{20}$-arylalkyl, $C_7$-$C_{20}$-alkylaryl, fluorinated $C_1$-$C_{12}$-alkyl, fluorinated $C_6$-$C_{18}$-aryl, fluorinated $C_7$-$C_{20}$-arylalkyl or fluorinated $C_7$-$C_{20}$-alkylaryl,

$R^5$, $R^7$ are identical or different and are each a hydrogen atom or a $C_1$-$C_{20}$ group, preferably $C_1$-$C_{18}$-alkyl, $C_2$-$C_{10}$-alkenyl, $C_3$-$C_{15}$-alkylalkenyl, $C_6$-$C_{18}$-aryl, $C_5$-$C_{18}$-heteroaryl, $C_7$-$C_{20}$-arylalkyl, $C_7$-$C_{20}$-alkylaryl, fluorinated $C_1$-$C_{12}$-alkyl, fluorinated $C_6$-$C_{18}$-aryl, fluorinated $C_7$-$C_{20}$-arylalkyl or fluorinated $C_7$-$C_{20}$-alkylaryl,

$R^8$ and $R^9$ are identical or different and are each a hydrogen atom, a halogen atom or a $C_1$-$C_{20}$ group, preferably a linear or branched $C_1$-$C_{18}$-alkyl group, $C_2$-$C_{10}$-alkenyl, $C_3$-$C_{15}$-alkylalkenyl, a substituted or unsubstituted $C_6$-$C_{18}$-aryl group, in particular phenyl, tolyl, xylyl, tert-butylphenyl, ethylphenyl, naphthyl, acenaphthyl, phenanthrenyl or anthracenyl, $C_5$-$C_{18}$-heteroaryl, $C_7$-$C_{20}$-arylalkyl, $C_7$-$C_{20}$-alkylaryl, fluorinated $C_1$-$C_{12}$-alkyl, fluorinated $C_6$-$C_{18}$-aryl, fluorinated $C_7$-$C_{20}$-arylalkyl or fluorinated $C_7$-$C_{20}$-alkylaryl or two radicals $R^8$ or $R^9$ form a monocyclic or polycyclic ring system which may in turn be substituted,

l, l' are identical or different and are each an integer from zero to 4, preferably 1 or 2, particularly preferably 1,

p is 1 for doubly positively charged metal ions or 2 for singly positively charged metal ions or metal ion fragments,

y is from 0 to 2 and

B is a bridging structural element between the two indenyl radicals.

3. A process as claimed in any of the preceding claims, wherein M is zirconium.

4. A process as claimed in any of the preceding claims in which a transition metal compound (Ia) of the following formula

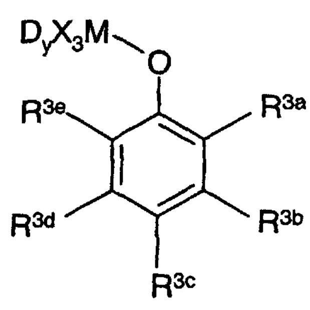

(Ia)

where

M is Ti, Zr or Hf,

X is a halogen atom,

D is an uncharged Lewis base ligand, preferably a linear, cyclic or branched oxygen-, sulfur-, nitrogen-

or phosphorus-containing hydrocarbon, particularly preferably an ether, polyether, amine or polyamine,

$R^{3a}$ is halogen or $Si(R^{12})_3$, where $R^{12}$ are identical or different and are each a hydrogen atom or a $C_1$-$C_{14}$ group, preferably $C_1$-$C_4$-alkyl, $C_1$-$C_4$-alkoxy, $C_6$-$C_{10}$-aryl, $C_6$-$C_{10}$-fluoroaryl, $C_6$-$C_{10}$-aryloxy, $C_2$-$C_{10}$-alkenyl, $C_7$-$C_{14}$-arylalkyl or $C_7$-$C_{14}$-alkylaryl,
or $R^{3a}$ is a $C_1$-$C_{30}$ group, preferably $C_1$-$C_{25}$-alkyl, $C_2$-$C_{25}$-alkenyl, $C_3$-$C_{15}$-alkylalkenyl, $C_6$-$C_{24}$-aryl, $C_5$-$C_{24}$-heteroaryl, $C_1$-$C_{10}$-alkyloxy, $C_6$-$C_{10}$-aryloxy, $C_7$-$C_{30}$-arylalkyl, $C_7$-$C_{30}$-alkylaryl, fluorinated $C_1$-$C_{25}$-alkyl, fluorinated $C_6$-$C_{24}$-aryl, fluorinated $C_7$-$C_{30}$-arylalkyl or fluorinated $C_7$-$C_{30}$-alkylaryl,

$R^{3b}$ to $R^{3e}$ are identical or different and are each hydrogen, halogen or a $C_1$-$C_{30}$ group, preferably $C_1$-$C_{25}$-alkyl, $C_2$-$C_{25}$-alkenyl, $C_3$-$C_{15}$-alkylalkenyl, $C_6$-$C_{24}$-aryl, $C_5$-$C_{24}$-heteroaryl, $C_1$-$C_{10}$-alkyloxy, $C_6$-$C_{10}$-aryloxy, $C_7$-$C_{30}$-arylalkyl, $C_7$-$C_{30}$-alkylaryl, fluorinated $C_1$-$C_{25}$-alkyl, fluorinated $C_6$-$C_{24}$-aryl, fluorinated $C_7$-$C_{30}$-arylalkyl or fluorinated $C_7$-$C_{30}$-alkylaryl, or two or more radicals $R^{3a}$ to $R^{3e}$ may be joined to one another so that the radicals $R^3$ and the atoms of the benzene ring which connect them form a $C_4$-$C_{24}$ ring system which may in turn be substituted, and

y is from 0 to 2,

is used.

**5.** A process as claimed in claim 4, wherein

M is zirconium,

X is chlorine,

D is an uncharged oxygen- or nitrogen-containing Lewis base ligand, preferably an ether, polyether, amine or polyamine,

$R^{3a}$ is halogen or a $C_1$-$C_{10}$ group, preferably $C_1$-$C_8$-alkyl, $C_2$-$C_8$-alkenyl, $C_3$-$C_8$-alkylalkenyl, $C_6$-$C_{10}$-aryl, $C_5$-$C_9$-heteroaryl, $C_1$-$C_4$-alkyloxy, $C_6$-$C_{10}$-aryloxy, $C_7$-$C_{10}$-arylalkyl, $C_7$-$C_{10}$-alkylaryl,

$R^{3b}$ to $R^{3e}$ are identical or different and are each hydrogen, halogen or a $C_1$-$C_{10}$ group, preferably $C_1$-$C_8$-alkyl, $C_2$-$C_8$-alkenyl, $C_3$-$C_8$-alkylalkenyl, $C_6$-$C_{10}$-aryl, $C_5$-$C_9$-heteroaryl, $C_1$-$C_4$-alkyloxy, $C_6$-$C_{10}$-aryloxy, $C_7$-$C_{10}$-arylalkyl, $C_7$-$C_{10}$-alkylaryl, or two or more radicals $R^{3a}$ to $R^{3e}$ are joined to one another so that the radicals $R^3$ and the atoms of the benzene ring which connect them form a $C_4$-$C_8$ ring system which may in turn be substituted, and

y is from 0 to 2.

**6.** A process as claimed in claim 4 or 5, wherein

M is zirconium,

X is chlorine,

D is tetrahydrofuran, 1,2-dimethoxyethane or N,N,N',N'-tetramethylethylenediamine,

$R^{3a}$ is chlorine, bromine or a $C_1$-$C_{10}$ group, preferably $C_1$-$C_6$-alkyl, $C_2$-$C_4$-alkenyl, $C_6$-$C_{10}$-aryl,

$R^{3b}$ to $R^{3d}$ are identical or different and are each hydrogen, chlorine, bromine or a $C_1$-$C_{10}$ group, preferably $C_1$-$C_6$-alkyl, $C_2$-$C_4$-alkenyl, $C_6$-$C_{10}$-aryl, or two or more radicals $R^{3a}$ to $R^{3e}$ are joined to one another so that the radicals $R^3$ and the atoms of the benzene ring which connect them form a $C_4$-$C_6$ ring system which may in turn be substituted, and

y is from 0 to 2.

**7.** A process as claimed in any of claims 4 to 6, wherein the ratio of pseudo-rac/pseudo-meso in the crude metallocene product is greater than 1.

**8.** A process as claimed in any of claims 4 to 7, wherein the ratio of pseudo-rac/pseudo-meso is greater than 4.

**9.** A metallocene of the formula (II) obtainable by a process as claimed in any of the preceding claims 1 to 8, wherein M is not titanium.

**10.** A metallocene of the formula (IV) obtainable by a process as claimed in any of claims 2 to 8.

**11.** A metallocene as claimed in claim 10 in which the zirconium fragment is zirconium monochloride mono(2,6-dimethylphenoxide), zirconium monochloride mono(2,4-di-tert-butylphenoxide), zirconium monochloride mono(2-methylphenoxide), zirconium monochloride mono(2-isopropylphenoxide), zirconium monochloride mono(2,4-dimethylphenoxide), zirconium monochloride mono(2,3-dimethylphenoxide), zirconium monochloride mono(2,4,6-trimethylphenoxide), zirconium monochloride mono(2-isopropyl-5-methylphenoxide), zirconium monochloride mono (2-tert-butyl-6-methylphenoxide), zirconium monochloride mono(2,6-diisopropylphenoxide), zirconium monochloride mono(1-naphthoxide) or zirconium monochloride mono(2-phenylphenoxide).

**12.** A metallocene as claimed in claim 9 used for the polymerization of one or more olefins of the formula $R^{\alpha}$-C=CH-$R^{\beta}$, where $R^{\alpha}$ and $R^{\beta}$ are identical or different and are each a hydrogen atom or a hydrocarbon having from 1 to 20 carbon atoms or $R^{\alpha}$ and $R^{\beta}$ together with the atoms connecting them form one or more rings.

**13.** The use of a transition metal compound of the formula (Ia) for the stereoselective preparation of monoaryloxy-metallocenes of the formula (II),

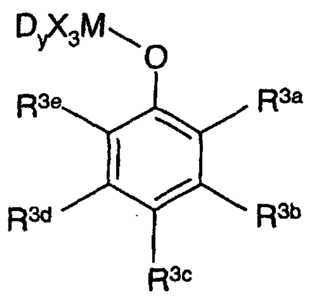

**(Ia)**

where the symbols D, X, M and $R^{3a-3e}$ are as defined above.

**Revendications**

**1.** Procédé de préparation de monoaryloxy-métallocènes de formule (II), **caractérisé en ce que** l'on fait réagir un composé de départ, consistant en un ligand de formule (III), avec un dérivé de métal de transition de formule (I),

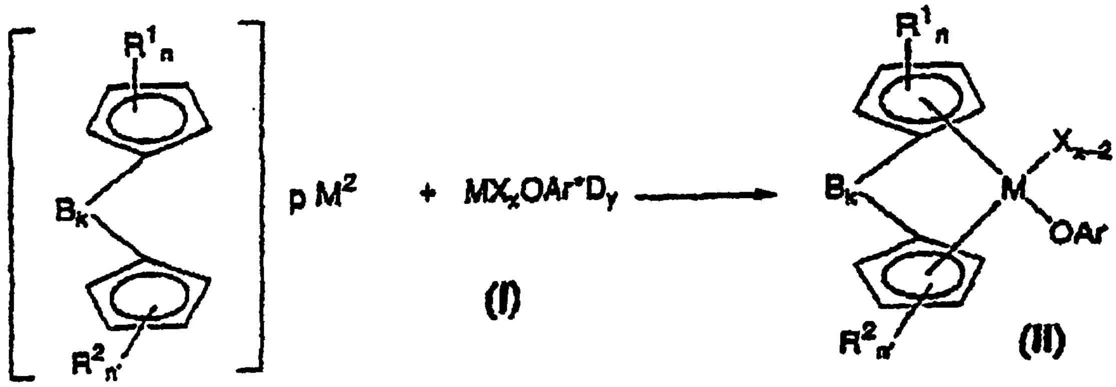

(III) (I) (II)

dans lequel

| | |
|---|---|
| M | est un métal des groupes III, IV, V ou VI de la Classification périodique des éléments, |
| X | est un atome d'halogène, |
| Ar | représente un radical aromatique hydrocarboné en $C_6$-$C_{40}$, hétéoaryle en $C_5$-$C_{24}$, alkylaryle en $C_7$-$C_{30}$, aryle en $C_6$-$C_{24}$ renfermant du fluor ou alkylaryle en $C_7$-$C_{30}$ renfermant du fluor, de préférence un groupe aryle en $C_6$-$C_{14}$ substitué par un reste alkyle en $C_1$-$C_6$ et/ou aryle en $C_6$-$C_{10}$, |
| D | est un ligand neutre consistant en une base de Lewis, de préférence un groupe hydrocarboné linéaire, cyclique ou ramifié renfermant de l'oxygène, du soufre, de l'azote ou du phosphore, |
| $M^2$ | est Li, Na, K, MgCl, MgBr, Mg ou Ca, |
| $R^1$ | sont identiques ou différents, et chacun consiste en un groupe Si$(R^{12})_3$, où les substituants $R^{12}$, identiques ou différents, sont des atomes d'hydrogène ou des radicaux hydrocarbonés en $C_1$-$C_{40}$, de préférence un radical alkyle en $C_1$-$C_{20}$, fluoroalkyle en $C_1$-$C_{10}$, alcoxy en $C_1$-$C_{10}$, aryle en $C_6$-$C_{20}$, fluoroaryle en $C_6$-$C_{10}$, aryloxy en $C_6$-$C_{10}$, alkényle en $C_2$-$C_{10}$, arylalkyle en $C_7$-$C_{40}$, alkylaryle en $C_7$-$C_{40}$ ou arylalkényle en $C_8$-$C_{40}$, |
| ou chaque $R^1$ | est un radical hydrocarboné en $C_1$-$C_{30}$, de préférence un radical alkyle en $C_1$-$C_{25}$, alkényle en $C_2$-$C_{25}$, alkylalkényle en $C_3$-$C_{15}$, aryle en $C_6$-$C_{24}$, hétéroaryle en $C_5$-$C_{24}$, arylalkyle en $C_7$-$C_{30}$, alkylaryle en $C_7$-$C_{30}$, alkyle en $C_1$-$C_{25}$ fluoré, aryle en $C_6$-$C_{24}$ fluoré, arylalkyle en $C_7$-$C_{30}$ fluoré ou alkylaryle en $C_7$-$C_{30}$ fluoré, |
| | ou deux ou plusieurs substituants $R^1$ sont reliés entre eux de telle façon qu'ils forment, avec les atomes du cycle cyclopentadiényle auxquels il sont reliés, un système cyclique en $C_4$-$C_{24}$, qui est éventuellement substitué, |
| $R^2$ | sont identiques ou différents, et chacun consiste en un groupe Si$(R^{12})_3$, où les substituants $R^{12}$, identiques ou différents, sont des atomes d'hydrogène ou des radicaux hydrocarbonés en $C_1$-$C_{40}$, de préférence un radical alkyle en $C_1$-$C_{20}$, fluoroalkyle en $C_1$-$C_{10}$, alcoxy en $C_1$-$C_{10}$, aryle en $C_6$-$C_{20}$, fluoroaryle en $C_6$-$C_{10}$, aryloxy en $C_6$-$C_{10}$, alkényle en $C_2$-$C_{10}$, arylalkyle en $C_7$-$C_{40}$, alkylaryle en $C_7$-$C_{40}$ ou arylalkényle en $C_8$-$C_{40}$, |
| ou bien $R^2$ | est un radical hydrocarboné en $C_1$-$C_{30}$, de préférence un radical alkyle en $C_1$-$C_{25}$, alkényle en $C_2$-$C_{25}$, alkylalkényle en $C_3$-$C_{15}$, aryle en $C_6$-$C_{24}$, hétéroaryle en $C_5$-$C_{24}$, arylalkyle en $C_7$-$C_{30}$, alkylaryle en |

$C_7$-$C_{30}$, alkyle en $C_1$-$C_{25}$ fluoré, aryle en $C_6$-$C_{24}$ fluoré, arylalkyle en $C_7$-$C_{30}$ fluoré ou alkylaryle en $C_7$-$C_{30}$ fluoré,

ou bien deux ou plusieurs substituants $R^2$ sont reliés entre eux de telle façon que le substituant $R^2$ et les atomes du cycle cyclopentadiényle auquel il sont reliés forment un système cyclique en $C_4$-$C_{24}$, qui est éventuellement substitué,

x est égal au degré d'oxydation de M moins 1,

n est égal à 1 à 5 pour k = 0 et n est égal à 0 à 4 pour k = 1,

n' est égal à 1 à 5 pour k = 0 et n' est égal à 0 à 4 pour k = 1,

k est égal à 0 ou 1 et

p est égal à 1 pour des ions métalliques portant deux charges positives ou à 2 pour des ions métalliques ou fragments d'ions métalliques portant une charge positive,

y est un nombre compris entre 0 et 2,

B est un élément structurel de pontage entre les deux cycles cyclopentadiényles.

2. Procédé selon la revendication 1, **caractérisé en ce que** l'on prépare un ansa-monoaryloxy-bis-indényl-métallocène de formule (IV) par réaction d'un composé de départ, consistant en un ligand de formule (V) avec un dérivé de métal de transition de formule (Ia),

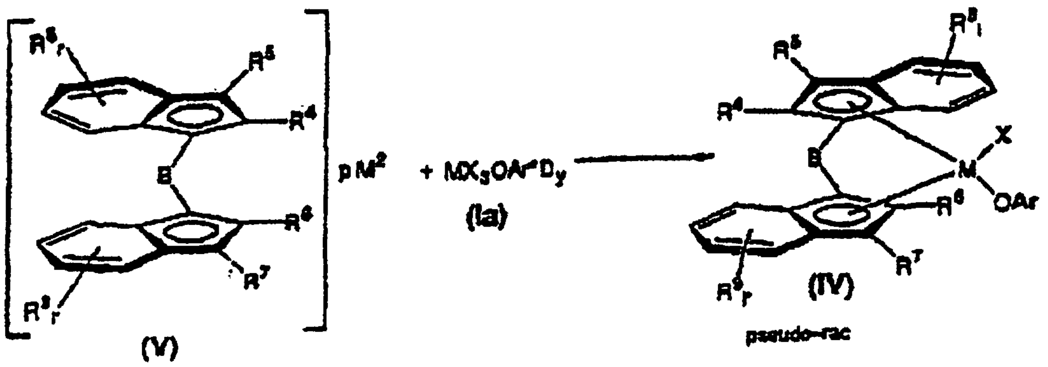

où

M est Ti, Zr ou Hf

X est un atome d'halogène;

Ar est un radical aromatique hydrocarboné en $C_6$-$C_{40}$, hétéoaryle en $C_5$-$C_{24}$, alkylaryle en $C_7$-$C_{30}$, aryle en $C_6$-$C_{24}$ fluoré ou alkyaryle en $C_7$-$C_{30}$ fluoré, de préférence un groupe aryle en $C_6$-$C_{14}$ substitué par un reste alkyle en $C_1$-$C_6$ et/ou aryle en $C_6$-$C_{10}$,

D est un ligand neutre consistant en une base de Lewis, de préférence un groupe hydrocarboné linéaire, cyclique ou ramifié, renfermant de l'oxygène, du soufre, de l'azote ou du phosphore, plus particulièrement un éther, un polyéther, une amine ou une polyamine,

$M^2$ est Li, Na, K, MgCl, MgBr, Mg ou Ca,

$R^4$, $R^6$ sont identiques ou différents et représentent un atome d'hydrogène ou un radical hydrocarboné en $C_1$-$C_{20}$, de préférence un radical alkyle en $C_1$-$C_{18}$, alkényle en $C_2$-$C_{10}$, alkylalkényle en $C_3$-$C_{15}$, aryle en $C_6$-$C_{18}$, hétéroaryle en $C_5$-$C_{18}$, arylalkyle en $C_7$-$C_{20}$, alkylaryle en $C_7$-$C_{20}$, alkyle en $C_1$-$C_{12}$ fluoré, aryle en $C_6$-$C_{18}$ fluoré, arylalkyle en $C_7$-$C_{20}$ fluoré ou alkylaryle en $C_7$-$C_{20}$ fluoré,

$R^5$, $R^7$ sont identiques ou différents et représentent un atome d'hydrogène ou un radical hydrocarboné en $C_1$-$C_{20}$, de préférence un radical alkyle en $C_1$-$C_{18}$, alkényle en $C_2$-$C_{10}$, alkylalkényle en $C_3$-$C_{15}$, aryle en $C_6$-$C_{18}$, hétéroaryle en $C_5$-$C_{18}$, arylalkyle en $C_7$-$C_{20}$, alkylaryle en $C_7$-$C_{20}$, alkyle en $C_1$-$C_{12}$ fluoré, aryle en $C_6$-$C_{12}$ fluoré, arylalkyle en $C_7$-$C_{20}$ fluoré ou alkylaryle en $C_7$-$C_{20}$ fluoré,

$R^8$ et $R^9$ identiques ou différents représentent un atome d'hydrogène, un atome d'halogène ou un radical hydrocarboné en $C_1$-$C_{20}$, de préférence un radical alkyle en $C_1$-$C_{18}$, linéaire ou ramifié, alkényle en $C_2$-$C_{10}$, alkylalkényle en $C_3$-$C_{15}$, aryle en $C_6$-$C_{18}$, éventuellement substitué, en particulier phényle, tolyl, xylyl, tert-butylphényle, éthylphényle, naphtyle, acénaphtyle, phénanthrényle, anthracényle, hétéroaryle en $C_5$-$C_{18}$, arylalkyle en $C_7$-$C_{20}$, alkylaryle en $C_7$-$C_{20}$, alkyle en $C_1$-$C_{12}$ fluoré, aryle en $C_6$-$C_{18}$

fluoré, arylalkyle en $C_7$-$C_{20}$ fluoré ou alkylaryle en $C_7$-$C_{20}$ fluoré ou bien deux substituants $R^8$ ou $R^9$ forment un système cyclique mono ou polycyclique, qui lui-même est éventuellement substitué,

l, l' identiques ou différents représentent un nombre entier entre 0 et 4, de préférence 1 ou 2, plus particulièrement égal à 1,

p est égal à 1 pour un ion métallique portant deux charges positives ou égal à 2 pour des ions métalliques ou des fragments d'ions métalliques portant une seule charge positive,

y est un nombre compris entre 0 et 2 et

B est un élément structurel de pontage entre les deux groupes indényle.

3. Procédé selon l'une quelconque des revendications précédentes, **caractérisé en ce que** M est le zirconium.

4. Procédé selon l'une quelconque des revendications précédentes, **caractérisé en ce que** l'on utilise un dérivé de métal de transition (Ia) de formule suivante

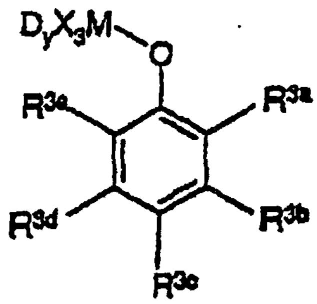

(Ia)

où

M représente Ti, Zr ou Hf

X est un atome d'halogène,

D est un ligand neutre consistant en une base de Lewis, de préférence un groupe hydrocarboné linéaire, cyclique ou ramifié renfermant de l'oxygène, du soufre, de l'azote ou du phosphore, tout particulièrement un éther, polyéther, amine ou polyamine,

$R^{3a}$ est un atome d'halogène ou le groupe $Si(R^{12})_3$, où les substituants $R^{12}$, identiques ou différents consistent en un atome d'hydrogène ou un radical hydrocarboné en $C_1$-$C_{14}$, de préférence un radical alkyle en $C_1$-$C_4$, alcoxy en $C_1$-$C_4$, aryle en $C_6$-$C_{10}$, fluoroaryle en $C_6$-$C_{10}$, aryloxy en $C_6$-$C_{10}$, alkényle en $C_2$-$C_{10}$, arylalkyle en $C_7$-$C_{14}$ ou alkylaryle en $C_7$-$C_{14}$,

ou bien $R^{3a}$ est un radical hydrocarboné en $C_1$-$C_{30}$, de préférence un radical alkyle en $C_1$-$C_{25}$, alkényle en $C_2$-$C_{25}$, alkylalkényle en $C_3$-$C_{15}$, aryle en $C_6$-$C_{24}$, hétéroaryle en $C_5$-$C_{24}$, alkyloxy en $C_1$-$C_{10}$, aryloxy en $C_6$-$C_{10}$, alrylalkyle en $C_7$-$C_{30}$, alkylaryle en $C_7$-$C_{30}$, alkyle en $C_1$-$C_{25}$ fluoré, aryle en $C_6$-$C_{24}$ fluoré, arylalkyle en $C_7$-$C_{30}$ fluoré ou alkylaryle en $C_7$-$C_{30}$ fluoré,

$R^{3b}$ à $R^{3e}$, identiques ou différents, représentent un atome d'hydrogène, un atome d'halogène ou un radical hydrocarboné en $C_1$-$C_{30}$, de préférence alkyle en $C_1$-$C_{25}$, alkényle en $C_2$-$C_{25}$, alkylalkényle en $C_3$-$C_{15}$, aryle en $C_6$-$C_{24}$, hétéroaryle en $C_5$-$C_{24}$, alkyloxy en $C_1$-$C_{10}$, aryloxy en $C_6$-$C_{10}$, arylalkyle en $C_7$-$C_{30}$, alkylaryle en $C_7$-$C_{30}$, alkyle en $C_1$-$C_{25}$ fluoré, aryle en $C_6$-$C_{24}$ fluoré, arylalkyle en $C_7$-$C_{30}$ fluoré, ou alkylaryle en $C_7$-$C_{30}$ fluoré, ou bien deux ou plusieurs substituants $R^{3a}$ à $R^{3e}$ peuvent être reliés entre eux de telle façon que les substituants $R^3$ et les atomes du cycle benzène auxquels il sont reliés forment un système cyclique en $C_4$ à $C_{24}$, qui lui-même peut éventuellement être substitué, et

y est un nombre entre 0 et 2.

5. Procédé selon la revendication 4, **caractérisé en ce que**

M est le zirconium,

X est le chlore,

D est un ligand neutre consistant en une base de Lewis renfermant de l'oxygène ou de l'azote, de préférence un éther, un polyéther, une amine ou une polyamine,

$R^{3a}$ est un atome d'halogène ou un radical hydrocarboné en $C_1$-$C_{10}$, de préférence un radical alkyle en $C_1$-$C_8$, alkényle en $C_2$-$C_8$, alkylalkényle en $C_3$-$C_8$, aryle en $C_6$-$C_{10}$, hétéroaryle en $C_5$-$C_9$, alkyloxy en $C_1$-$C_4$, aryloxy en $C_6$, arylalkyle en $C_7$-$C_{10}$, alkylaryle en $C_7$-$C_{10}$,

$R^{3b}$ à $R^{3e}$, identiques ou différents, sont un atome d'hydrogène, un atome d'halogène ou un radical hydrocarboné en $C_1$-$C_{10}$, de préférence un radical alkyle en $C_1$-$C_8$, alkényle en $C_2$-$C_8$, alkylalkényle en $C_3$-$C_8$, aryle en $C_6$-$C_{10}$, hétéroaryle en $C_5$-$C_9$, alkyloxy en $C_1$-$C_4$, aryloxy en $C_6$, arylalkyle en $C_7$-$C_{10}$, alkylaryle en $C_7$-$C_{10}$ ou bien deux ou plusieurs substituants $R^{3a}$ à $R^{3e}$ sont reliés entre eux de telle façon que les substituants $R^3$ et les atomes du cycle benzène auxquels il sont reliés forment un système cyclique en $C_4$ à $C_8$, qui lui-même peut éventuellement être substitué, et

y est un nombre entre 0 et 2.

**6.** Procédé selon la revendication 4 ou 5, **caractérisé en ce que**

M est le zirconium,

X est le chlore,

D est un tétrahydrofurane, un 1,2-diméthoxyéthane ou une N,N,N',N'-tétraméthyléthylènediamine,

$R^{3a}$ est un atome de chlore, de brome ou un radical hydrocarboné en $C_1$-$C_{10}$, de préférence alkyle en $C_1$-$C_6$, alkényle en $C_2$-$C_4$, aryle en $C_6$-$C_{10}$,

$R^{3b}$ à $R^{3e}$ identiques ou différents, consistent en un atome d'hydrogène, de chlore, de brome ou un radical hydrocarboné en $C_1$-$C_{10}$, de préférence alkyle en $C_1$-$C_6$, alkényle en $C_2$-$C_4$, aryle en $C_6$-$C_{10}$, ou bien deux ou plusieurs substituants $R^{3a}$ à $R^{3e}$ sont reliés entre eux de telle façon que les substituants $R^3$ et les atomes du cycle benzène auxquels il sont liés forment un système cyclique en $C_4$ à $C_6$, qui lui-même peut être éventuellement substitué, et

y est un nombre compris entre 0 et 2.

**7.** Procédé selon l'une quelconque des revendications 4 à 6, **caractérisé en ce que** dans le produit de départ consistant en un métallocène, le rapport pseudo rac/pseudo meso est supérieur à 1.

**8.** Procédé selon l'une quelconque des revendications 4 à 7, **caractérisé en ce que** le rapport pseudo rac/pseudo meso est supérieur à 4.

**9.** Métallocène de formule (II) susceptible d'être obtenu selon un procédé selon l'une quelconque des revendications 1 à 8 ci-dessus, dans lequel M n'est pas le titane.

**10.** Métallocène de formule (IV) susceptible d'être obtenu selon un procédé selon l'une quelconque des revendications 2 à 8.

**11.** Métallocène selon la revendication 10, **caractérisé en ce que** par fragment de zirconium on entend les

- monochloro-mono-(2,6-di-méthyl-phénolate) de zirconium,
- monochloro-mono-(2,4-di-tert-butyl-phénolate) de zirconium,
- monochloro-mono-(2-méthyl-phénolate) de zirconium,
- monochloro-mono-(2-isopropyl-phénolate) de zirconium,
- monochloro-mono-(2,4-diméthyl-phénolate) de zirconium,
- monochloro-mono-(2,3-diméthyl-phénolate) de zirconium,
- monochloro-mono-(2,4,6-triméthyl-phénolate) de zirconium,
- monochloro-mono-(2-iso-propyl-5-méthyl-phénolate) de zirconium,
- monochloro-mono-(2-tert-butyl-6-méthyl-phénolate) de zirconium,
- monochloro-mono-(2,6-di-iso-propyl-phénolate) de zirconium,
- monochloro-mono-(1-naphatalate) de zirconium ou
- monochloro-mono-(2-phényl-phénolate) de zirconium.

**12.** Métallocène selon la revendication 9, **caractérisé en ce qu'**il est utilisé pour la polymérisation d'une ou plusieurs oléfines de formule $R^\alpha$-C=CH-$R^\beta$, ou $R^\alpha$ et $R^\beta$, identiques ou différents, représentent un atome d'hydrogène ou un radical hydrocarboné comportant 1 à 20 atomes de carbone ou bien $R^\alpha$ et $R^\beta$ forment ensemble avec les atomes qui leur sont reliés un ou plusieurs cycles.

13. Utilisation d'un dérivé de métal de transition de formule (Ia) pour la préparation stéréo-sélective de monoaryloxy-métallocènes de formule (II).

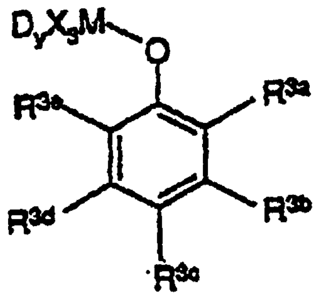

(Ia)

où les symboles D, X, M et $R^{3a-3e}$ ont les significations indiquées ci-dessus.